(19) 

Europäisches
Patentamt
European
Patent Office
Office européen
des brevets

(11) **EP 4 344 113 A1**

(12) **EUROPEAN PATENT APPLICATION**
published in accordance with Art. 153(4) EPC

(43) Date of publication:
**27.03.2024 Bulletin 2024/13**

(21) Application number: **21946513.5**

(22) Date of filing: **25.06.2021**

(51) International Patent Classification (IPC):
*H04L 5/00* (2006.01)

(52) Cooperative Patent Classification (CPC):
**H04L 5/00**

(86) International application number:
**PCT/CN2021/102432**

(87) International publication number:
**WO 2022/267020 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZUO, Zhisong
Dongguan, Guangdong 523860 (CN)**
• **CUI, Shengjiang
Dongguan, Guangdong 523860 (CN)**

(74) Representative: **Ipside
7-9 Allées Haussmann
33300 Bordeaux Cedex (FR)**

(54) **WIRELESS COMMUNICATION METHOD, TERMINAL DEVICE, AND NETWORK DEVICE**

(57) Embodiments of the present disclosure provide a wireless communication method, a terminal device, and a network device. The method comprises: encoding a transport block which is transmitted on the basis of a plurality of time domain unit sets to obtain a first bit sequence; performing rate matching on the first bit sequence on the basis of the plurality of time domain unit sets to obtain a plurality of second bit sequences that respectively correspond to the plurality of time domain unit sets, wherein the plurality of time domain unit sets comprise at least one time domain unit set, and for each of the at least one time domain unit set, a second bit sequence corresponding to the time domain unit set comprises uplink control information (UCI) multiplexed on the time domain unit set for transmission; and respectively modulating and sending the plurality of second bit sequences by means of the plurality of time domain unit sets. By means of the method, rate matching for a multi-slot transport block process can be achieved, and the reception and demodulation performance of the transport block and the UCI is also improved.

200

encoding a transport block which is transmitted based on a plurality of time domain unit sets and obtaining a first bit sequence — S210

performing a rate matching process on the first bit sequence based on the plurality of time domain unit sets and obtaining a plurality of second bit sequences respectively corresponding to the plurality of time domain unit sets, wherein the plurality of time domain unit sets comprises at least one time domain unit set, a second bit sequence corresponding to each of the at least one time domain unit set comprises uplink control information (UCI) multiplexed in the each of the at least one time domain unit set to be transmitted — S220

modulating and transmitting the plurality of second bit sequences, respectively, based on the plurality of time domain unit sets — S230

FIG. 2

EP 4 344 113 A1

**Description**

**TECHNICAL FIELD**

The present disclosure relates to a technical field of communications, and in particular to a wireless communication method, a terminal device, and a network device.

**BACKGROUND**

In a release 17 (R17) of the 3rd Generation Partnership Project (3GPP), a transport block (TB) processing over multi-slot (TBoMS) is considered to be introduced in repeat transmission of PUSCH. That is, a transport block size (TBS) is determined based on multiple slots, or in other words, one TB is transmitted on the multiple slots. However, for a rate matching mechanism in R15/R16, a resource allocating process is only considered to be performed for OFDM symbols in one scheduled slot or a first slot when a rate matching process is performed on a TB. Therefore, the rate matching mechanism in the R15/R16 is not applicable to the TBoMS during multi-slot transmission. In addition, a part of the multiple slots may further be multiplexed to transmit data of a control channel. However, until now, there is still no solution in relation to how to map the data of the control channel in a process of performing the rate matching process on a bit sequence after the TB is encoded.

Therefore, how to achieve the rate matching process for the TBoMS is a technical problem urgent to be solved in the related art.

**SUMMARY OF THE DISCLOSURE**

The embodiments of the present disclosure provide a wireless communication method, a terminal device, and a network device, which are not only able to achieve the rate matching process for the TBoMS, but also able to improve receiving and modulating performances of the TB and uplink control information.

In a first aspect, the present disclosure provides a wireless communication method including encoding a transport block which is transmitted based on a plurality of time domain unit sets and obtaining a first bit sequence, wherein the plurality of time domain unit sets includes at least one time domain unit set; performing a rate matching process on the first bit sequence based on the plurality of time domain unit sets and obtaining a plurality of second bit sequences respectively corresponding to the plurality of time domain unit sets, wherein a second bit sequence corresponding to each of the at least one time domain unit set includes uplink control information (UCI) multiplexed in the each of the at least one time domain unit set to be transmitted; and modulating and transmitting the plurality of second bit sequences, respectively, based on the plurality of time domain unit sets.

In a second aspect, the present disclosure provides a wireless communication method including receiving a plurality of second bit sequences through a plurality of time domain unit sets, respectively, wherein the plurality of time domain unit sets includes at least one time domain unit set, and a second bit sequence corresponding to each of the at least one time domain unit set includes uplink control information (UCI) multiplexed in the each of the at least one time domain unit set to be transmitted; and decoding the plurality of second bit sequences and obtaining a target transport block.

In a third aspect, the present disclosure provides a terminal device. The terminal device is configured to perform the method of the above first aspect or various implementations of the first aspect. The terminal device includes function modules configured to perform the method of the first aspect or the various implementations of the first aspect.

In an embodiment, the terminal device may include a processing unit, and the processing unit is configured to perform functions related to information processing. For example, the processing unit may be a processor.

In an embodiment, the terminal device may include a transmitting unit and/or a receiving unit. The transmitting unit is configured to perform functions related to transmission, and the receiving unit is configured to perform functions related to reception. For example, the transmitting unit may be a transmitter, and the receiving unit may be a receiver. For another example, the terminal device is a communication chip, the receiving unit may be an input circuit or interface of the communication chip, and the transmitting unit may be an output circuit or interface of the communication chip.

In a fourth aspect, the present disclosure provides a network device, and the network device is configured to the method of the above second aspect or various implementations of the second aspect. The terminal device includes function modules configured to perform the method of the second aspect or the various implementations of the second aspect.

In an embodiment, the network device may include a processing unit, and the processing unit is configured to perform functions related to information processing. For example, the processing unit may be a processor.

In an embodiment, the network device may include a transmitting unit and/or a receiving unit. The transmitting unit is configured to perform functions related to transmission, and the receiving unit is configured to perform functions related to reception. For example, the transmitting unit may be a transmitter, and the receiving unit may be a receiver.

For another example, the network device is a communication chip, the receiving unit may be an input circuit or interface of the communication chip, and the transmitting unit may be an output circuit or interface of the communication chip.

In a fifth aspect, the present disclosure provides a terminal device. The terminal device includes a processor and a memory. The memory is configured to store a computer program, and the processor is configured to call and run the computer program stored in the memory to perform the method in the above first aspect or various implementations of the first aspect.

In an embodiment, the processor is one or more and the memory is one or more.

In an embodiment, the memory may be integrated with the processor, or the memory may be arranged separately from the processor.

In an embodiment, the terminal device further includes a transmitter and a receiver.

In a sixth aspect, the present disclosure provides a network device. The network device includes a processor and a memory. The memory is configured to store a computer program, and the processor is configured to call and run the computer program stored in the memory to perform the method in the above second aspect or various implementations of the second aspect.

In an embodiment, the processor is one or more and the memory is one or more.

In an embodiment, the memory may be integrated with the processor, or the memory may be arranged separately from the processor.

In an embodiment, the network device further includes a transmitter and a receiver.

In a seventh aspect, the present disclosure provides a chip, and the chip is configured to implement the method of any one of the first aspect and the second aspect described above or various implementations thereof. The chip includes a processor, and the processor is configured to call and run a computer program from a memory to cause a device installed with the chip to perform the method of any one of the first aspect and the second aspect described above or various implementations thereof.

In an eighth aspect, the present disclosure provides a computer-readable storage medium, and the computer-readable storage medium is configured to store a computer program, and the computer program is configured to cause a computer to perform the method of any one of the first aspect and the second aspect described above or various implementations thereof.

In a ninth aspect, the present disclosure provides a computer program product, and the computer program product includes computer program instructions. The computer program instructions are configured to cause a computer to perform the method of any one of the first aspect and the second aspect described above or various implementations thereof.

In a tenth aspect, the present disclosure provides a computer program, when the computer program is run on a computer, the computer is caused to perform the method of any one of the first aspect and the second aspect described above or various implementations thereof.

Based on above solution, the TB is transmitted based on the plurality of time domain unit sets, and the rate matching process is performed on the first bit sequence based on the plurality of time domain unit sets. That is, resource allocating process is performed for the first bit sequence based on the plurality of time domain unit sets. Namely, the number of REs available to transmit the first bit sequence may be calculated from a perspective of the plurality of time domain unit sets, such that the number of REs available to transmit the first bit sequence is avoided to be calculated based on a single time domain unit set. Thus, the rate matching process may be ensured to be performed continuously on the first bit sequence. That is, the first bit sequence may be continuously allocated on the plurality of time domain unit sets, which may improve both a power spectral density and a coverage area of the first bit sequence. In this way, the receiving and modulating performance of the TB may be improved.

In addition, after the TB is transmitted based on the plurality of time domain unit sets, transmission positions or transmission resources of bits corresponding to the UCI in the time domain unit sets are required to be determined. In some embodiments of the present disclosure, for each of the at least one time domain unit set, the second bit sequence corresponding to the time domain unit set is constructed to include the UCI which is multiplexed in the time domain unit set to be transmitted. That is, for a time domain unit set in which a multiplexed UCI exists, transmission positions or transmission resources of the bits corresponding to the UCI in the time domain unit set are designed. In this way, the receiving and modulating performance of the UCI may be improved.

In short, on one hand, as the TB is transmitted based on the plurality of time domain unit sets, and the rate matching process is performed on the first bit sequence based on the plurality of time domain unit sets, the receiving and modulating performance of the TB may be improved in some embodiments of the present disclosure. On the other hand, as the second bit sequence corresponding to the time domain unit set is constructed to include the UCI which is multiplexed in the time domain unit set to be transmitted, the receiving and modulating performance of the UCI may be improved in some embodiments of the present disclosure.

## BRIEF DESCRIPTION OF THE DRAWINGS

FIG. 1 is an example of a system framework according to some embodiments of the present disclosure.
FIG. 2 is a schematic flowchart of a wireless communication method according to some embodiments of the present disclosure.
FIG. 3 is an exemplary structural view of a plurality of time domain unit set configured to transmit a TB according to some embodiments of the present disclosure.
FIGS. 4 and 5 are schematic block views of performing a rate matching process based on a circular buffer according to some embodiments of the present disclosure.
FIG. 6 is another schematic flowchart of a wireless communication method according to some embodiments of the present disclosure.
FIG. 7 is a schematic block view of a terminal device according to some embodiments of the present disclosure.
FIG. 8 is a schematic block view of a network device according to some embodiments of the present disclosure.
FIG. 9 is a schematic block view of a communication device according to some embodiments of the present disclosure.
FIG. 10 is a schematic block view of a chip according to some embodiments of the present disclosure.

## DETAILED DESCRIPTION

The technical solution in the embodiments of the present disclosure is described below in combination with accompanying drawings in the embodiments of the present disclosure. Obviously, described embodiments are a part of rather than all embodiments of the present disclosure. Based on the embodiments of the present disclosure, all other embodiments obtained by one of ordinary skill in the art without creative effort fall into the scope of the present disclosure.

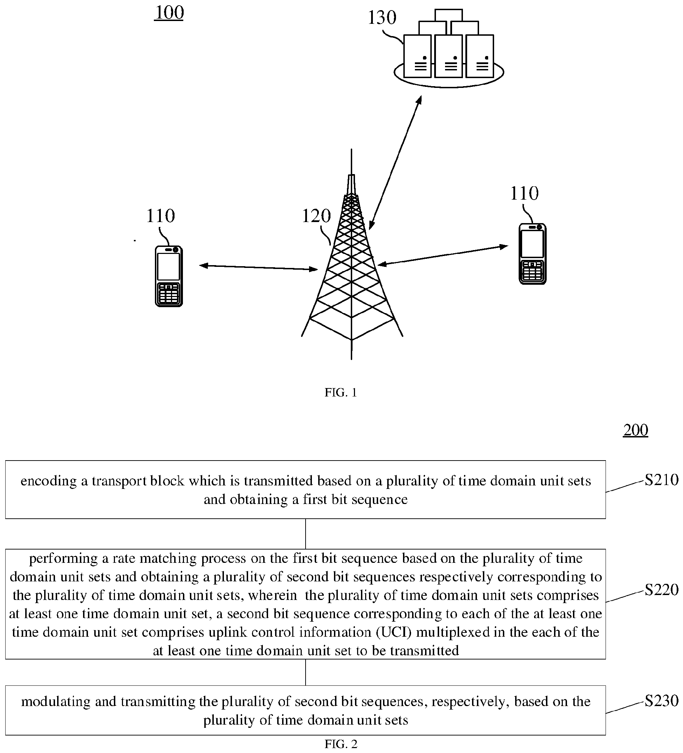

FIG. 1 is an example of a system framework according to some embodiments of the present disclosure.

As shown in FIG. 1, the communication system 100 may include a terminal device 110 and a network device 120. The network device 120 may communicate with the terminal device 110 through radio. Multi-service transmission is supported between the terminal device 110 and the network device 120.

It should be understood that the communication system 100 is only taken as an example in some embodiments of the present disclosure for illustration, while the embodiments of the present disclosure are not limited thereto. That is, the technical solution of the embodiments of the present disclosure may be applied to various communication systems, e.g., a Long Term Evolution (LTE) system, a LTE Time Division Duplex (TDD), a Universal Mobile Telecommunication System (UMTS), an Internet of Things (IoT) system, a Narrow Band Internet of Things (NB-IoT) system, an Enhanced Machine-Type Communications (eMTC) system, a 5G communication system (also referred to as a New Radio (NR) communication system), or a future communication system, etc.

In the communication system 100 as shown in FIG. 1, the network device 120 may be an access network device communicating with the terminal device 100. The access network device may provide a communication coverage for a specific geographic region and may communicate with the terminal device 110 (e.g., a UE) located within the coverage region.

The network device 120 may be an Evolutional Node B (eNB or eNodeB) in the LTE system, or a Next Generation Radio Access Network (NG) device, or a base station (gNB) in an NR system, or a wireless controller in a Cloud Radio Access Network (CRAN), or a base station (gNB) in an NR system, or a wireless controller in a Cloud Radio Access Network (CRAN). Alternatively, the network device120 may be a repeater, an access point, an in-vehicle device, a wearable device, a hub, a switch, a bridge, a router, or a network device in a future evolved Public Land Mobile Network (PLMN), etc.

The terminal device 110 may be arbitrary terminal devices, which include, but is not limited to, a terminal device being in wired or wireless connection with the network device 120 or other terminal devices.

For example, the terminal device 110 may refer to an access terminal, a user equipment (UE), a user unit, a user station, a mobile station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with wireless communication capabilities, a computing device or other processing device connected to a wireless modem, an in-vehicle device, a wearable device, a terminal device in a 5G network, or a terminal device in a future evolutionary network.

The terminal device 110 may be applied in the device to device (D2D) communication.

The wireless communication system 100 may also include a core network device 130 communicating with the base station. The core network device 130 may be a 5G Core (5GC) device, e.g., an Access and Mobility Management Function (AMF), or an Authentication Server Function (AUSF), or User Plane Function (UPF), or Session Management Function (SMF). In some embodiments, the core network device 130 may also be an Evolved Packet Core (EPC) device of a LTE network, such as, e.g., a SMF + Core Packet Gateway (SMF+PGW-C) device. It should be understood that the SMF+PGW-C may achieve functions achievable for the SMF and the PGW-C at the time. In a process of the network evolution, the core network device described above may also be referred to as other names, or may form new network entities through dividing functions of a core network, which is not limited in the embodiments of the present disclosure.

Connections may be established between various function units in the communication system 100 through next generation (NG) interfaces to achieve the communication.

For example, the terminal device may establish a radio connection with the access network device through a NR interface to transmit user-plane data and control-plane signaling. The terminal device may establish a control-plane signaling connection with the AMF through a NG interface 1 (referred to as N1). The access network device, e.g., a NG wireless access gNB, may establish a user-plane data connection with the UPF through a NG interface 3 (referred to as N3). The access network device may establish the control-plane signaling connection with the AMF through a NG interface 2 (referred to as N2). The UPF may establish the control-plane signaling connection with the SMF through a NG interface 4 (referred to as N4). The UPF may interact user-plane data with a data network through a NG interface 6 (referred to as N6). The AMF may establish the control-plane signaling connection with the SMF through a NG interface 11 (referred to as N11). The SMF may establish the control-plane signaling connection with the PCF through a NG interface 7 (referred to as N7).

FIG. 1 exemplarily illustrates one base station, one core network device, and two terminal devices. In some embodiments, the wireless communication system 100 may include a plurality of base station devices, and a coverage scope of each base station may include other numbers of terminal devices, which are not limited in the embodiments of the present disclosure.

It should be understood that devices having communication functions in the network/system in the embodiments of the present disclosure may all be referred to as communication devices. Taking the communication system 100 illustrated in FIG. 1 as an example, the communication devices may include the network device 120 and the terminal device 110 which have communication functions. The network device 120 and the terminal device 110 may be the devices described above, which are not repeated herein. The communication devices may also include other devices in the communication system 100, e.g., a network controller, other network entities such as a mobility management entity, and the like, which is not limited in the embodiments of the present disclosure.

It should be understood that terms "system" and "network" are often used interchangeably herein. The term "and/or" is merely a description of an association relationship of associated objects, which may indicate that three relationships may exist. For example, A and/or B indicates three cases, i.e., A existing alone, both A and B existing at the same time, and B existing alone. In addition, the character "/" herein generally indicates that an associated object before "/" and an associated object after "/" are in an "or" relationship.

In order to facilitate understanding the solution provided by the present disclosure, an encoding process of Low Density Parity Check Code (LDPC) is depicted briefly in the following.

In the encoding process of the LDPC, after receiving a TB of MAC, a physical layer first adds 16 or 24 bits of Cyclic Redundancy Check (CRC) to the TB. After the TB is added with the CRC, the TB is required to be divided into two or more code blocks having the same length when the number of bits contained in the TB is greater than a value, and each code block is added with the CRC. Each code block added with the CRC then independently performs a LDPC encoding process. Subsequently, each encoded code block performs a rate matching process, HARQ processing, and interleaving, respectively.

The CRC is a channel coding technique which generates short fixed-bit check code based on data such as network data packet or a computer file, etc. The CRC is configured to detect or check an error which may occurs after data is transmitted or saved. The CRC employs a principle of division and remainder for error detection. The CRC adds (n-k) redundancy bits, i.e., a frame check sequence (FCS), to be after to-be-transmitted data D of k bits, thus, a transmission frame T of n bits is formed. The rate matching refers to bits on a transmission channel being repeated, zero filled, or punctured, to match a carrying capability of a physical channel and reach a bit rate required by a transmission format during channel mapping. In the rate matching process, when the number of input bits is less than the number of output bits, it indicates to be repeated or zero-bit filled. When the number of the input bits is greater than the number of the output bits, it indicates to be punctured. To be repeated means that current bits are inserted once between the current bits and bits thereafter. To be zero-bit filled means that zero bits are inserted between the current bits and bits thereafter. To be punctured means that some bits are punctured according to a specific pattern. That is, some bits are removed or punctured from a bit sequence and simultaneously the following bits are shifted forward by one in turn. A de-rate matching algorithm is opposite to the rate matching process, in which punctured bits are recovered, or repeated bits or zero-filled bits are punctured.

In other words, when an encoded bit sequence is denoted as $d_1$, $d_2$, $d_3$, ..., $d_{N-1}$ (N is a length of the encoded sequence), which is input into a circular buffer having a length of $N_{cb}$. An output sequence after the rate matching process is denoted as $e_k$, k=0, 1, 2, ..., E-1. Encoded bits obtained in the rate matching process are interleaved and then modulated, i.e., bit-interleaved coding modulation, which is configured to ensure the performance stability of LDPC codes under a high-order modulation and fading channels. An interleaved sequence is denoted as $f_1, f_2, f_3, ..., f_{E-1}$.

When the rate matching process is performed on data of the NR, the encoded bit sequence is multiplexed on resource elements (RE) of a data channel based on the calculated number of REs of the data channel available to transmit the encoded bit sequence. One RE may be one subcarrier with one OFDM symbol, which may be determined based on a parameter such as the number of OFDM symbols in one slot indicated in schedule information (e.g., DCI). As an example, a number of REs may be determined in a following formula:

$$N_{RE} = \min\left(156, N'_{RE}\right) \cdot n_{PRB}$$

$N_{RE}$ indicates the number of REs, and $n_{PRB}$ indicates the number of scheduled and allocated RBs. $N'_{RE} = N_{sc}^{RB} \cdot N_{symb}^{sh} - N_{DMRS}^{PRB} - N_{oh}^{PRB}$, $N_{sc}^{RB}$ is the number of subcarriers on each RB, $N_{symb}^{sh}$ indicates the number of OFDM symbols in one slot, $N_{DMRS}^{PRB}$ indicates the number of REs occupied by DMRS in each RB, and $N_{oh}^{PRB}$ indicates an overhead RE parameter which is configured by a high layer or fixed.

In order to enhance reliability of uplink transmission, NR R15 introduces slot aggregation PUSCH repeat transmission. The slot aggregation PUSCH repeat transmission is illustrated firstly in the following.

The slot aggregation PUSCH repeat transmission means that the same transmission block is repeatedly transmitted for K times with different redundancy versions. In other words, the slot aggregation PUSCH repeat transmission means that a bit sequence mapped in a plurality of actually-repeated slots is a repeat of a single transmission block. The base station configures repetition times K for a terminal through a high-level parameter, i.e., pusch-Aggregation-Factor. The terminal repeatedly transmits the same TB on K continuous slots. Alternatively, PUSCH copies carrying the TB over the K continuous slots occupy the same symbols in time domain. Alternatively, the K continuous slots employ the same DMRS time domain structure. The RV of the first PUSCH copy is indicated by uplink grant signaling, and RVs of remaining PUSCH copies are cycled in an order of {0,2,3,1}. Transmission of RVs is illustrated in combination with table 1.

Table 1

| RV_id indicated by DCI of scheduling PUSCH | RV_id applied to the nth transmission | | | |
|---|---|---|---|---|
| | n mod 4=0 | n mod 4=1 | n mod 4=2 | n mod 4=3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

As shown in Table 1, the terminal may implement the rate matching process on the TB through a circular buffer. That is, the terminal may store the encoded bits in the circular buffer and sequentially read from the circular buffer based on the RV during each transmission, such that the rate matching process is achieved. In other words, for each transmission, a read position of rate matching is determined by the version number of the RV. Alternatively, the version number of the RV may be configured to indicate which position in this buffer is to extract data from. As an example, four RVs are pre-configured in the circular buffer, i.e., RV0, RV1, RV2, and RV3. A selection order of the four RVs is [0, 2, 3, 1]. That is, RV0 is a starting position of the first transmission, RV2 is a starting position of the second transmission, RV3 is a starting position of the third transmission, and RV1 is a starting position of the fourth transmission. The first transmission refers to the first transmission of data, while the second transmission, the third transmission, and the fourth transmission are all retransmission of data. 0, 2, 3, and 1 are a typical selection order of RVs during data transmission in LTE/NR. 0, 2, 3, and 1 are a value corresponding to the first RV (i.e., RV0), a value corresponding to the third RV (i.e., RV2), a value corresponding to the fourth RV (i.e., RV3), and a value corresponding to the second RV (i.e., RV1), respectively.

In a release 17 (R17) of the 3rd Generation Partnership Project (3GPP), a TBoMS is considered to be introduced in repeat transmission of PUSCH. That is, a transport block size (TBS) is determined based on multiple slots, or in other words, one TB is transmitted on the multiple slots. However, for a rate matching mechanism in R15/R16, a resource allocating process is only considered to be performed for OFDM symbols in one scheduled slot or a first slot when a rate matching process is performed on a TB. Therefore, the rate matching mechanism in the R15/R16 is not applicable to the TBoMS during multi-slot transmission. In addition, a part of the multiple slots may further be multiplexed to transmit data of a control channel. However, until now, there is still no solution in relation to how to map the data of the control channel in a process of performing the rate matching process on a bit sequence after the TB is encoded.

The embodiments of the present disclosure provide a wireless communication method, a terminal device, and a network device, which are not only able to achieve the rate matching process for the TBoMS, but also able to improve receiving and modulating performances of the TB and uplink control information.

FIG. 2 is a schematic flowchart of a wireless communication method 200 according to some embodiments of the present disclosure. The method 200 may be implemented by the terminal device, e.g., the terminal devices as shown in FIG. 1.

As shown in FIG. 2, the method 200 may include a part or all of the following contents.

In an operation S210, the method may include encoding a transport block which is transmitted based on a plurality of time domain unit sets and obtaining a first bit sequence.

In an operation S220, the method may include performing a rate matching process on the first bit sequence based on the plurality of time domain unit sets and obtaining a plurality of second bit sequences respectively corresponding to the plurality of time domain unit sets.

The plurality of time domain unit sets includes at least one time domain unit set, a second bit sequence corresponding to each of the at least one time domain unit set includes uplink control information (UCI) multiplexed in the each of the at least one time domain unit set to be transmitted.

In an operation S230, the method includes modulating and transmitting the plurality of second bit sequences, respectively, based on the plurality of time domain unit sets.

In other words, the transport block (TB) which is transmitted based on the plurality of time domain unit sets is encoded and $d_1, d_2, d_3, ..., d_{N-1}$ are obtained. The rate matching process is performed on the first bit sequence based on the plurality of time domain unit sets and $e_k$ (k=0, 1, 2, ..., E-1) respectively corresponding to the plurality of time domain unit sets is obtained. $e_k$ is intertwined and then modulated, and then $f_1, f_2, f_3, ..., f_{E-1}$ are obtained, i.e., modulated $f_1, f_2, f_3, ..., f_{E-1}$ through the plurality of time domain unit sets.

In embodiments of the present disclosure, the TB is transmitted based on the plurality of time domain unit sets, and the rate matching process is performed on the first bit sequence based on the plurality of time domain unit sets. That is, resource allocating process is performed for the first bit sequence based on the plurality of time domain unit sets. Namely, the number of REs available to transmit the first bit sequence may be calculated from a perspective of the plurality of time domain unit sets, such that the number of REs available to transmit the first bit sequence is avoided to be calculated based on a single time domain unit set. Thus, the rate matching process may be ensured to be performed continuously on the first bit sequence. That is, the first bit sequence may be continuously allocated on the plurality of time domain unit sets, which may improve both a power spectral density and a coverage area of the first bit sequence. In this way, the receiving and modulating performance of the TB may be improved.

In addition, after the TB is transmitted based on the plurality of time domain unit sets, transmission positions or transmission resources of bits corresponding to the UCI in the time domain unit sets are required to be determined. In some embodiments of the present disclosure, for each of the at least one time domain unit set, the second bit sequence corresponding to the time domain unit set is constructed to include the UCI which is multiplexed in the time domain unit set to be transmitted. That is, for a time domain unit set in which a multiplexed UCI exists, transmission positions or transmission resources of the bits corresponding to the UCI in the time domain unit set are designed. In this way, the receiving and modulating performance of the UCI may be improved.

In short, on one hand, as the TB is transmitted based on the plurality of time domain unit sets, and the rate matching process is performed on the first bit sequence based on the plurality of time domain unit sets, the receiving and modulating performance of the TB may be improved in some embodiments of the present disclosure. On the other hand, as the second bit sequence corresponding to the time domain unit set is constructed to include the UCI which is multiplexed in the time domain unit set to be transmitted, the receiving and modulating performance of the UCI may be improved in some embodiments of the present disclosure.

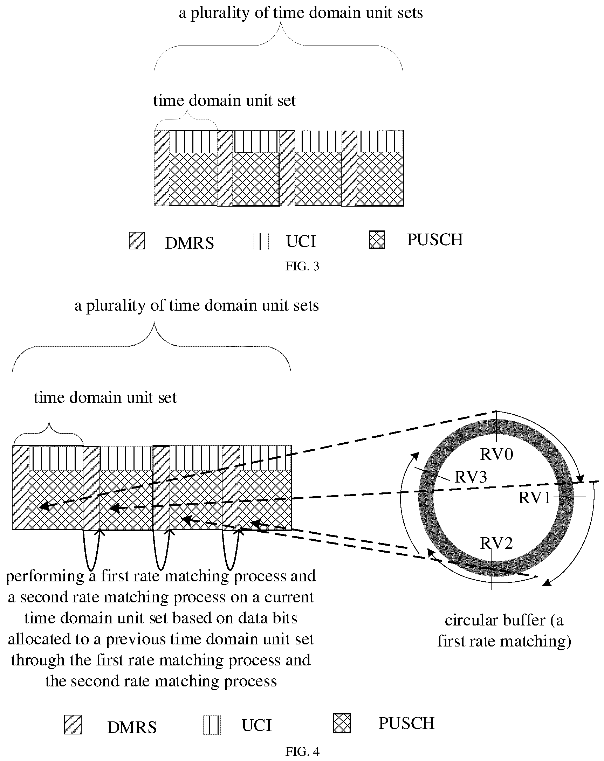

It is noted that, when the uplink data channel and the uplink control channel are transmitted on the same time domain unit set, the UCI may be multiplexed on REs of the data channel in a manner of rate matching. FIG. 3 is an exemplary structural view of a plurality of time domain unit set configured to transmit a TB according to some embodiments of the present disclosure. As shown in FIG. 3, for one time domain unit set, a Demodulation Reference Signal (DMRS), the UCI, and a Physical Uplink Shared Channel (PUSCH) may be carried simultaneously in the time domain unit set. In combination with the solution of the present disclosure, at least one time domain unit set involved in embodiments of the present disclosure may be a time domain unit set which is required to transmit the DMRS, the UCI, and the PUSCH at the same time. In other words, multiplexed UCIs may exist in at least one time domain unit set, respectively. Similarly, time domain unit sets in the plurality of time domain unit sets other than the at least one time domain unit set, may be configured to only transmit the DMRS and the PUSCH.

In some embodiments, the operation S220 may include: for a $x^{th}$ time domain unit set of the at least one time domain unit set, determining a second bit sequence corresponding to the $x^{th}$ time domain unit set in a following manner: determining a position offset factor corresponding to the $x^{th}$ time domain unit set; performing a first rate matching process on the first bit sequence based on a version number of a redundancy version (RV) and the position offset factor corresponding to the $x^{th}$ time domain unit set, and determining a starting position of the second bit sequence corresponding to the $x^{th}$ time domain unit set in a circular buffer; performing a second rate matching process on the first bit sequence based on a resource of UCI multiplexed in the $x^{th}$ time domain unit set, and determining an ending position of the second bit sequence corresponding to the $x^{th}$ time domain unit set in the circular buffer; and obtaining the second bit sequence corresponding to the time domain unit set based on the starting position and the ending position.

In other words, the position offset factor corresponding to the $x^{th}$ time domain unit set is configured to determine the starting position of the second bit sequence corresponding to the $x^{th}$ time domain unit set in the circular buffer, and the resource of the UCI multiplexed in the $x^{th}$ time domain unit set is configured to determine the ending position of the second bit sequence corresponding to the $x^{th}$ time domain unit set in the circular buffer. After the starting position and the ending position are obtained, the second bit sequence corresponding to the $x^{th}$ time domain unit set may be read from the circular buffer.

In some embodiments, the position offset factor corresponding to the $x^{th}$ time domain unit set may be determined by the terminal device and the network device themselves. Alternatively, the position offset factor corresponding to the $x^{th}$ time domain unit set is indicated by the network device, or the position offset factor corresponding to the $x^{th}$ time domain unit set is predefined.

It is to be noted that, in the embodiments of the present disclosure, the term "preset" may be implemented by pre-saving corresponding codes, tables, or other manners available to indicate relevant information in a device (e.g., including the terminal device and the network device). A specific implementation manner is not limited in embodiments of the present disclosure. For example, the term "preset" may indicate being defined in a protocol. In some embodiments, the term "protocol" may refer to a standard protocol in the communication field, e.g., including a LTE protocol, a NR protocol, and a relevant protocol in a future communication system, which is not limited in the present disclosure. In addition, it should be understood that the term "indicate" involved in some embodiments of the present disclosure may be indicating directly, or may also be indicating indirectly, or may also be indicating having a relevant relationship. For example, A indicating B may present that A directly indicates B, for example, B may be acquired through A. A indicating B may also present that A indirectly indicates B, for example, A indicates C, and B may be acquired through C. A indicating B may also present that a relevant relationship may exist between A and B.

In some embodiments, the terminal device performs the second rate matching process on the first bit sequence based on the number of REs available to transmit the first bit sequence in the $x^{th}$ time domain unit set, and determines the ending position of the second bit sequence corresponding to the $x^{th}$ time domain unit set in the circular buffer. In other words, the number of REs of the multiplexed UCI is not configured for the rate matching process on the first bit sequence. That is, during the rate matching process on the first bit sequence, a transmission resource is reserved for the multiplexed UCI in the $x^{th}$ time domain unit set.

As an example, the terminal device determines the number of REs available to transmit the multiplexed UCI in the $x^{th}$ time domain unit set. The terminal device determines the number of REs available to transmit the first bit sequence based on the number of the REs available to transmit the multiplexed UCI and the number of REs allocated for transmitting the TB in the $x^{th}$ time domain unit set. The terminal device performs the second rate matching process on the first bit sequence based on the number of the REs available to transmit the first bit sequence, and determines the ending position of the second bit sequence corresponding to the $x^{th}$ time domain unit set in the circular buffer.

In some embodiments, the number of REs available to transmit the multiplexed UCI is determined in a following formula:

$$S_1 = S_2 * C;$$

$S_1$ indicates the number of the REs available to transmit the multiplexed UCI, $S_2$ indicates the number of REs allocated for transmitting the TB, and C indicates a beta coefficient.

As an example, the terminal device determines the number of REs available for data transmission in the $x^{th}$ time domain unit set. The terminal device performs the second rate matching process on the first bit sequence based on the number of REs allocated for transmitting the TB, and determines the ending position of the second bit sequence corresponding to the $x^{th}$ time domain unit set in the circular buffer. A part of data bits in the second bit sequence corresponding to the $x^{th}$ time domain unit set is replaced with a part or all of information in the UCI multiplexed in the $x^{th}$ time domain unit set to be transmitted.

In some embodiments, the terminal device determines the number of REs allocated for transmitting the TB in the $x^{th}$ time domain unit set, and determines the ending position of the second bit sequence corresponding to the $x^{th}$ time domain unit set in the circular buffer based on the number of REs allocated for transmitting the TB. In other words, the number of REs of the multiplexed UCI is configured for the rate matching process on the first bit sequence. That is, when the rate matching process is performed on the first bit sequence, no transmission resource is reserved for the multiplexed UCI in the $x^{th}$ time domain unit set. Based on this, after the rate matching process on the first bit sequence is completed, the part of data bits in the second bit sequence corresponding to the $x^{th}$ time domain unit set is replaced with the part or all of information in the UCI multiplexed in the $x^{th}$ time domain unit set to be transmitted.

Of course, the part of data bits in the second bit sequence corresponding to the $x^{th}$ time domain unit set is replaced with the part of information in the UCI multiplexed in the $x^{th}$ time domain unit set to be transmitted, the other part of information in the UCI multiplexed in the $x^{th}$ time domain unit set to be transmitted may be discarded. Alternatively, during the rate matching process on the first bit sequence, a transmission resource is reserved for the other part of information in the $x^{th}$ time domain unit set, which is not limited in some embodiments of the present disclosure.

In other words, the number of bits available to transmit the multiplexed UCI may be determined in a following formula:

$$S_3 = S_4 * C;$$

$S_3$ indicates the number of bits available to transmit the multiplexed UCI, $S_4$ indicates the number of transmittable bits in the first bit sequence, and C indicates the beta coefficient. In an embodiment, $S_3$ may be determined based on $S_2$ and a modulation order. In some embodiments, the beta coefficient may be a parameter semi-statically configured by a high-layer parameter, or may also be a dynamically-configured parameter, which is not limited in embodiments of the present disclosure.

In some embodiments, the position offset factor corresponding to the $x^{th}$ time domain unit set is determined based on the version number of the RV and an ending position of a second bit sequence corresponding to a $(x-1)^{th}$ time domain unit set of the plurality of the time domain unit sets in the circular buffer.

In other words, a starting position of a current time domain unit set in the circular buffer is determined based on an ending position of a second bit sequence corresponding to a previous time domain unit set in the circular buffer. That is, the starting position of the current time domain unit set in the circular buffer is influenced by the ending position of the second bit sequence corresponding to the previous time domain unit set in the circular buffer.

In some embodiments, the position offset factor corresponding to the $x^{th}$ time domain unit set is determined as the total number of bits occupied by second bit sequences corresponding to all time domain unit sets prior to the $x^{th}$ time domain unit set in the circular buffer.

In other words, the starting position of the current time domain unit set in the circular buffer is determined based on the total number of bits occupied by the second bit sequence corresponding to the previous time domain unit set in the circular buffer. That is, the starting position of the current time domain unit set in the circular buffer is influenced by the total number of bits occupied by the second bit sequence corresponding to the previous time domain unit set in the circular buffer.

As an example, the position offset factor corresponding to the $x^{th}$ time domain unit set may be determined in a following formula:

$$O_x = \sum_{i=0}^{x-1} d_i;$$

$O_x$ indicates the position offset factor corresponding to the $x^{th}$ time domain unit set, and $d_i$ indicates the number of bits occupied by a second bit sequence corresponding to an $i^{th}$ time domain unit set of the plurality of time domain unit sets in the circular buffer.

In some embodiments, the position offset factor corresponding to the $x^{th}$ time domain unit set is determined as the total number of transmittable bits in all time domain unit sets prior to the $x^{th}$ time domain unit set.

In other words, the starting position of the second bit sequence corresponding to the $x^{th}$ time domain unit set in the circular buffer may be determined based on the version number of the RV and the total number of transmittable bits in all time domain unit sets prior to the $x^{th}$ time domain unit set. That is, the starting position of the second bit sequence corresponding to the $x^{th}$ time domain unit set in the circular buffer is influenced by the number of bits occupied by second bit sequences corresponding to other time domain unit sets in the circular buffer.

As an example, the position offset factor corresponding to the $x^{th}$ time domain unit set is determined in a following formula:

$$O_x = \sum_{i=0}^{x-1} t_i$$
;

$O_x$ indicates the position offset factor corresponding to the $x^{th}$ time domain unit set, and $t_i$ indicates the number of transmittable bits in the $i^{th}$ time domain unit set of the plurality of time domain unit sets.

In some embodiments, the method 200 may further include determining the number of transmittable bits in each time domain unit set of the plurality of time domain unit sets in the following manner: determining a total number of REs available for uplink transmission on the each time domain unit set according to a time-frequency resource corresponding to the each time domain unit set; and determining the number of transmittable bits in the each time domain unit set based on the number of the REs available for the uplink transmission in the each time domain unit set and the modulation order.

In other words, the terminal device first determines the total number of the REs available for the uplink transmission in a time domain unit set according to a time-frequency resource corresponding to the time domain unit set. The terminal device then determines the number of transmittable bits in the time domain unit set based on the number of the REs available for the uplink transmission in the time domain unit set and a modulation order. Subsequently, the total number of the transmittable bits in all time domain unit sets prior to the $x^{th}$ time domain unit set is determined to be the position offset factor corresponding to the $x^{th}$ time domain unit set.

In some embodiments, the time domain unit set only includes one time domain unit, or the time domain unit set includes at least one continuous time domain unit. The time domain unit includes a slot or a symbol.

The solution of the present disclosure is described in combination with some embodiments in the following.

Embodiment 1

In this embodiment, the terminal device determines the total number of the bits occupied by the second bit sequences corresponding to all time domain unit sets prior to the $x^{th}$ time domain unit set of the plurality of the time domain unit sets in the circular buffer to be the position offset factor corresponding to the $x^{th}$ time domain unit set.

FIG. 4 is a schematic block view of performing the rate matching process based on the circular buffer according to some embodiments of the present disclosure.

As shown in FIG.4, there is a first bit sequence after a single TB which the plurality of the time domain unit sets is configured for transmitting is encoded, and the multiplexed UCI exists in each of the plurality of the time domain unit sets. Specifically, the terminal device determines the TBS of a scheduled data channel, and then performs an encoding process based on parameter information such as the determined TBS and a code rate, to obtain encoded data bits. The TBS may be determined based on a scheduling parameter such as the number of REs configured to transmit the PUSCH, the code rate, and the modulation order. For example, the number of the REs may be determined based on all RE resources of the PUSCH allocated in Y time domain unit sets. In addition, for each time domain unit set of the plurality of the time domain unit sets, the terminal device may determine and encode control information bits in the time domain unit set based on configuration information of the control channel.

In other words, the terminal device processes the first bit sequence to a plurality of second bit sequences based on rate matching.

A processing process may refer to the following steps 1-3.

At step 1, the terminal device first determines the total number of the bits occupied by the second bit sequences corresponding to all time domain unit sets prior to the $x^{th}$ time domain unit set in the circular buffer to be the position offset factor corresponding to the $x^{th}$ time domain unit set. The terminal device then performs the first rate matching process on the first bit sequence based on the version number of the RV and the position offset factor corresponding to the $x^{th}$ time domain unit set, and determines the starting position of the second bit sequence corresponding to the $x^{th}$ time domain unit set in the circular buffer.

As an example, the starting position of the second bit sequence corresponding to the $x^{th}$ time domain unit set in the circular buffer is added by the version number of the RV (e.g., the version number of the RV is equal to 0 in FIG. 4) and the position offset factor (OFFSET) corresponding to the $x^{th}$ time domain unit set.

In some embodiments, when x>1, OFFSET is equal to data bits determined through the first rate matching process and the second data matching process in the $(x-1)^{th}$ time domain unit set. When x=1, OFFSET=0.

At step 2, the terminal device performs the second rate matching process on the first bit sequence based on the resource of the UCI multiplexed in the $x^{th}$ time domain unit set, and determines the ending position of the second bit sequence corresponding to the $x^{th}$ time domain unit set in the circular buffer.

As an example, the terminal device first determines the number of the REs available to transmit the multiplexed UCI in the $x^{th}$ time domain unit set, and then determines the number of the REs available to transmit the first bit sequence based on the number of the REs available to transmit the multiplexed UCI and the number of the REs allocated for transmitting the TB in the $x^{th}$ time domain unit set. Subsequently, the terminal device performs the second rate matching process on the first bit sequence based on the number of the REs available to transmit the first bit sequence and determines the ending position of the second bit sequence corresponding to the $x^{th}$ time domain unit set in the circular buffer. In some embodiments, the terminal device may determine the number of the REs available to transmit the multiplexed UCI based on the number of REs allocated for transmitting the TB and the beta coefficient. For example, the number of the REs available to transmit the multiplexed UCI = the number of the REs configured to transmit the first bit sequence $\times$ the beta coefficient. Of course, in other alternative embodiments, the terminal device may perform the second rate matching process on the first bit sequence based on the number of REs allocated for transmitting the TB after determining the number of the REs allocated for transmitting the TB in the $x^{th}$ time domain unit set, and determines the ending position of the second bit sequence corresponding to the $x^{th}$ time domain unit set in the circular buffer. In this case, a part of information of the multiplexed UCI is replaced into the second bit sequence corresponding to the $x^{th}$ time domain unit set through a manner of puncturing a part of data bits of the second bit sequence corresponding to the $x^{th}$ time domain unit set. In other words, the data bits which are punctured and removed are considered into the rate matching. That is, punctured data is counted into the OFFSET.

It is noted that, one TB may include one or more code blocks (CB). When the first rate matching process is performed on the first bit sequence, a scope of the rate matching process is performed on a CB-by-CB basis. That is, each CB uses an independent circular buffer.

At step 3, the plurality of the second bit sequences is modulated and transmitted, respectively, on the plurality of the time domain unit sets.

Embodiment 2

In this embodiment, the terminal device determines the total number of the transmittable bits in all time domain unit sets prior to the $x^{th}$ time domain unit set to be the position offset factor corresponding to the $x^{th}$ time domain unit set.

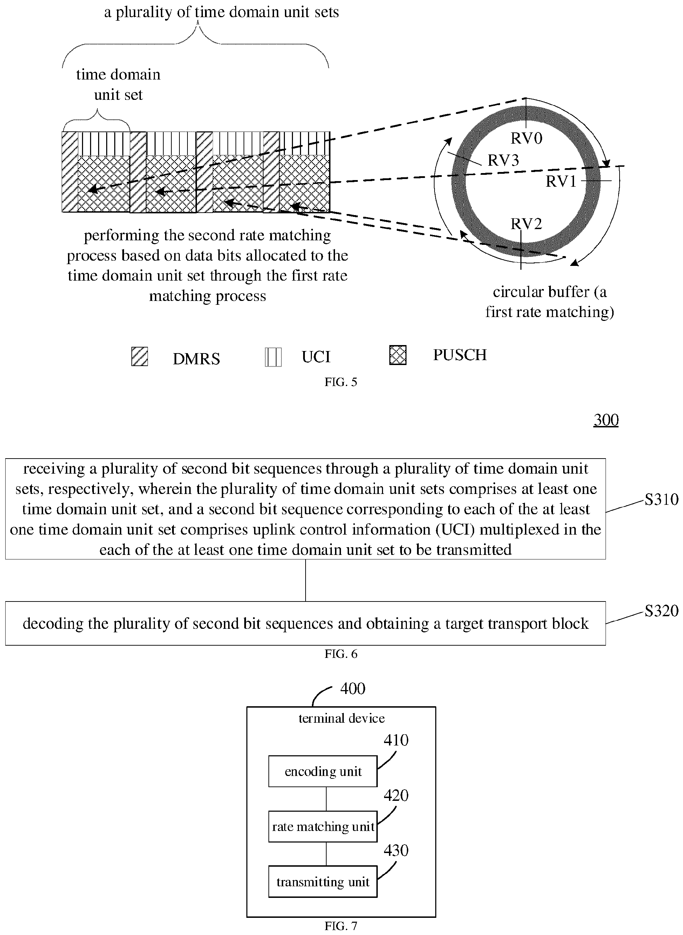

FIG. 5 is another schematic block view of performing the rate matching process based on the circular buffer according to some embodiments of the present disclosure.

As shown in FIG. 5, there is a first bit sequence after the single TB which the plurality of the time domain unit sets is configured for transmitting is encoded, and the multiplexed UCI exists in each of the plurality of the time domain unit sets. Specifically, the terminal device determines the TBS of the scheduled data channel, and then performs the encoding process based on the parameter information such as the determined TBS and the code rate, to obtain the encoded data bits. The TBS may be determined based on the scheduling parameter, such as the number of REs configured to transmit the PUSCH, the code rate, and the modulation order. For example, the number of the REs may be determined based on all RE resources of the PUSCH allocated in the Y time domain unit sets. In addition, for each time domain unit set of the plurality of the time domain unit sets, the terminal device may determine and encode the control information bits in the time domain unit set based on the configuration information of the control channel.

In other words, the terminal device processes the first bit sequence to the plurality of second bit sequences based on rate matching.

A processing process may refer to the following steps 1-3.

At Step 1, the terminal device first determines the total number of the bits occupied by the second bit sequences corresponding to all time domain unit sets prior to the $x^{th}$ time domain unit set in the circular buffer to be the position offset factor corresponding to the $x^{th}$ time domain unit set. The terminal device then performs the first rate matching process on the first bit sequence based on the version number of the RV and the position offset factor corresponding to the $x^{th}$ time domain unit set, and determines the starting position of the second bit sequence corresponding to the $x^{th}$ time domain unit set in the circular buffer.

As an example, the starting position of the second bit sequence corresponding to the $x^{th}$ time domain unit set in the circular buffer is added by the version number of the RV (e.g., the version number of the RV is equal to 0 in FIG. 4) and the position offset factor (OFFSET) corresponding to the $x^{th}$ time domain unit set.

In some embodiments, when $x > 1$, OFFSET is equal to the data bits determined through the first rate matching process in the $(x-1)^{th}$ time domain unit set. When $x=1$, OFFSET=0.

At Step 2, the terminal device performs the second rate matching process on the first bit sequence based on the resource of the UCI multiplexed in the $x^{th}$ time domain unit set, and determines the ending position of the second bit sequence corresponding to the $x^{th}$ time domain unit set in the circular buffer.

As an example, the terminal device first determines the number of the REs available to transmit the multiplexed UCI in the $x^{th}$ time domain unit set, and then determines the number of the REs available to transmit the first bit sequence based on the number of the REs available to transmit the multiplexed UCI and the number of the REs allocated for transmitting the TB in the $x^{th}$ time domain unit set. Subsequently, the terminal device performs the second rate matching process on the first bit sequence based on the number of the REs available to transmit the first bit sequence and determines the ending position of the second bit sequence corresponding to the $x^{th}$ time domain unit set in the circular buffer. In some embodiments, the terminal device may determine the number of the REs available to transmit the multiplexed UCI based on the number of REs allocated for transmitting the TB and the beta coefficient. For example, the number of the REs available to transmit the multiplexed UCI = the number of the REs configured to transmit the first bit sequence $\times$ the beta coefficient. Of course, in other alternative embodiments, the terminal device may perform the second rate matching process on the first bit sequence based on the number of REs allocated for transmitting the TB after determining the number of the REs allocated for transmitting the TB in the $x^{th}$ time domain unit set, and determines the ending position of the second bit sequence corresponding to the $x^{th}$ time domain unit set in the circular buffer. In this case, the part of information of the multiplexed UCI is replaced into the second bit sequence corresponding to the $x^{th}$ time domain unit set through the manner of puncturing the part of data bits of the second bit sequence corresponding to the $x^{th}$ time domain unit set. In other words, the data bits which are punctured and removed are considered into the rate matching. That is, the punctured data is counted into the OFFSET.

It is noted that, one TB may include one or more code blocks (CB). When the first rate matching process is performed for the first bit sequence, the scope of the rate matching process is performed on a CB-by-CB basis. That is, each CB uses an independent circular buffer.

At Step 3, the plurality of the second bit sequences is modulated and transmitted, respectively, on the plurality of the time domain unit sets.

It is noted that, a difference between the Embodiment 1 and the Embodiment 2 lies in the step 1. The position offset factor in the Embodiment 1 is influenced by the first rate matching process and the second rate matching process which is performed on the first bit sequence based on all time domain unit sets prior to the $X^{th}$ time domain unit set on the first bit sequence. The first rate matching process indicates a process of mapping the PUSCH or the first bit sequence to the plurality of time domain unit sets. The second rate matching process indicates a process of mapping the UCI to the plurality of time domain unit sets. In the Embodiment 2, the first rate matching process is firstly preformed on all time domain unit sets, and the second rate matching process is performed on each time domain unit set, respectively. Second rate matching processes for different time domain unit sets are mutually un-influenced.

In addition, it should be understood that the TB involved in embodiments of the present disclosure may be the PUSCH TB, and control information may be the PUCCH. Of course, the TB may be other types of TBs, or the control information may be replaced with other channels, which is not limited in embodiments of the present disclosure. For example, the control information may be also replaced with a pilot frequency signal. Based on this, these channels may be allowed to better repeatedly utilize time domain resources, which further enhances a performance of effective channel coverage.

Some embodiments of the present disclosure are described in detail in combination with the accompanying drawings above. However, the present disclosure is not limited to details of the above embodiments. Multiple simple variations for the technical solution of the present disclosure may be made within a scope of the technical conception of the present disclosure, and these simple variations all fall into the scope of the present disclosure. For example, each specific technical feature described in the above embodiments may be combined through any suitable manner without a contradiction. In order to avoid unnecessary repetition, various possible combinations are not separately described in the present disclosure. For another example, various different embodiments of the present disclosure may also be combined in any manner, and as long as the combination is not contrary to the idea of the present disclosure, and the combination should likewise be regarded as the content disclosed in the present disclosure.

It should also be understood that, in various method embodiments of the present disclosure, a value of a number of each process does not mean an execution sequence. The execution sequence of each process should be determined based on the function and inherent logic thereof, which should not constitute any limitation for an implementation process of embodiments of the present disclosure. In addition, in embodiments of the present disclosure, the terms "downlink" and "uplink" are configured to indicate transmission directions of a signal or data. The term "downlink" is configured to indicate that a transmission direction of the signal or the data is a first direction of being transmitted from a station node to the UE of a cell. The term "uplink" is configured to indicate that the transmission direction of the signal or data is a second direction of being transmitted from the UE of the cell to the station node. For example, the term "downlink signal" indicates that the transmission direction of the signal is the first direction. In addition, in embodiments of the present disclosure, the term "and/or" is merely configured to describe an association relationship between the associated objects, which may indicate that three relationships exit therein. A and/or B may indicate three cases, i.e., A existing alone, both A and B existing at the same time, and B existing alone. In addition, the character "j" herein generally indicates that the associated object before "j" and the associated object after "/" are in the "or" relationship.

A wireless communication method according to some embodiments of the present disclosure is described in detail above from the perspective of the terminal device in combination with FIG. 2 to FIG. 5. The wireless communication method according to some embodiments of the present disclosure is described below from the perspective of the network device in combination with FIG. 6.

FIG. 6 is schematic flowchart of a wireless communication method 300 according to some embodiments of the present disclosure. The method 300 may be implemented by the network device, e.g., the network device shown in FIG. 1.

As shown in FIG. 6, the method 300 may include operations S310-S320.

In an operation S310, the method 300 includes receiving a plurality of second bit sequences through a plurality of time domain unit sets, respectively.

The plurality of time domain unit sets includes at least one time domain unit set, and a second bit sequence corresponding to each of the at least one time domain unit set includes uplink control information (UCI) multiplexed in the each of the at least one time domain unit set to be transmitted

In an operation S320, the method 300 may include decoding the plurality of second bit sequences and obtaining a target transport block.

In some embodiments, the operation S320 may include: for the x^th time domain unit set of the at least one time domain unit set, decoding a second bit sequence corresponding to the x^th time domain unit set in a following manner: determining a position offset factor corresponding to the x^th time domain unit set; determining a starting position of the second bit sequence corresponding to the x^th time domain unit set in a circular buffer based on a version number of a RV and the position offset factor corresponding to the x^th time domain unit set; determining an ending position of the second bit sequence corresponding to the x^th time domain unit set in the circular buffer based on a resource of UCI multiplexed in the x^th time domain unit set; and decoding the second bit sequence corresponding to the x^th time domain unit set based on the starting position and the ending position.

In some embodiments, a number of REs available to transmit multiplexed UCI in the x^th time domain unit set is determined. A number of REs available to transmit a first bit sequence is determined based on the number of the REs available to transmit the multiplexed UCI and a number of REs allocated for transmitting a transport block (TB) in the x^th time domain unit set. The ending position of the second bit sequence corresponding to the x^th time domain unit set in the circular buffer is determined based on the number of the REs available to transmit the first bit sequence.

In an embodiment, the number of the REs available to transmit the first bit sequence may be directly equal to the number of REs allocated for transmitting the TB in the x^th time domain unit set minus the number of the REs available to transmit the multiplexed UCI.

In an embodiment, the number of the REs available to transmit the multiplexed UCI may be determined in the following formula:

$$S_1=S_2*C;$$

$S_1$ indicates the number of the REs available to transmit the multiplexed UCI, $S_2$ indicates the number of REs allocated for transmitting the TB, and C indicates a beta coefficient.

In some embodiments, the number of REs allocated for transmitting the TB in the x^th time domain unit is determined. The ending position of the second bit sequence corresponding to the x^th time domain unit set in the circular buffer is determined based on the number of REs allocated for transmitting the TB. A part of data bits in the second bit sequence corresponding to the x^th time domain unit set is replaced with a part or all of information in the UCI multiplexed in the x^th time domain unit set to be transmitted.

In some embodiments, the position offset factor corresponding to the x^th time domain unit set is determined based on the version number of the RV and an ending position of a second bit sequence corresponding to a (x-1)^th time domain unit set of the plurality of the time domain unit sets in the circular buffer.

In some embodiments, the position offset factor corresponding to the x^th time domain unit set is determined as a number of bits occupied by second bit sequences corresponding to all time domain unit sets prior to the x^th time domain unit set in the circular buffer.

In some embodiments, the position offset factor corresponding to the x^th time domain unit set is determined in a following formula:

$$O_x = \sum_{i=0}^{x-1} d_i ;$$

$O_x$ indicates the position offset factor corresponding to the x^th time domain unit set, and $d_i$ indicates a number of bits occupied by a second bit sequence corresponding to an i^th time domain unit set of the plurality of time domain unit sets in the circular buffer.

In some embodiments, the position offset factor corresponding to the x^th time domain unit set is determined as a total number of transmittable bits in all time domain unit sets prior to the x^th time domain unit set.

In some embodiments, the position offset factor corresponding to the x^th time domain unit set is determined in a following formula:

$$O_x = \sum_{i=0}^{x-1} t_i$$

$O_x$ indicates the position offset factor corresponding to the $x^{th}$ time domain unit set, and $t_i$ indicates a number of transmittable bits in an $i^{th}$ time domain unit set of the plurality of time domain unit sets.

In some embodiments, the method 300 may further include determining the number of transmittable bits in each time domain unit set of the plurality of time domain unit sets in the following manner: determining a total number of REs available for uplink transmission on the each time domain unit set according to a time-frequency resource corresponding to the each time domain unit set; and determining the number of transmittable bits in the each time domain unit set based on the number of the REs available for the uplink transmission in the each time domain unit set and a modulation order.

In some embodiments, each time domain unit set only includes one time domain unit, or the each time domain unit set includes at least one continuous time domain unit. The time domain unit includes a slot or a symbol.

It should be understood that the operations of the method 300 may refer to the operations of the method 200, which are not repeated herein for brevity.

The method embodiments of the present disclosure are described in detail above in combination with FIG. 1 to FIG. 6. Apparatus embodiments of the present disclosure are described in detail below in combination with FIG. 7 to FIG. 10.

FIG. 7 is a schematic block view of a terminal device 400 according to some embodiments of the present disclosure.

As shown in FIG. 7, the terminal device 400 may include an encoding unit 410, a rate matching unit 420, and a transmitting unit 430.

The encoding unit 410 is configured to encode a transport block which is transmitted based on a plurality of time domain unit sets and obtain a first bit sequence. The plurality of time domain unit sets includes at least one time domain unit set.

The rate matching unit 420 is configured to perform a rate matching process on the first bit sequence based on the plurality of time domain unit sets and obtain a plurality of second bit sequences respectively corresponding to the plurality of time domain unit sets.

A second bit sequence corresponding to each time domain unit set of the at least one time domain unit set includes uplink control information (UCI) multiplexed in the each time domain unit set to be transmitted.

The transmitting unit 430 is configured to modulate and transmit the plurality of second bit sequences, respectively, based on the plurality of time domain unit sets.

In some embodiments, the rate matching unit 420 is configured to, for the $x^{th}$ time domain unit set of the at least one time domain unit set, determine a second bit sequence corresponding to the $x^{th}$ time domain unit set in the following manner: determining a position offset factor corresponding to the $x^{th}$ time domain unit set; performing a first rate matching process on the first bit sequence based on a version number of a redundancy version (RV) and the position offset factor corresponding to the $x^{th}$ time domain unit set, and determining a starting position of the second bit sequence corresponding to the $x^{th}$ time domain unit set in a circular buffer; performing a second rate matching process on the first bit sequence based on a resource of UCI multiplexed in the $x^{th}$ time domain unit set, and determining an ending position of the second bit sequence corresponding to the $x^{th}$ time domain unit set in the circular buffer; and obtaining the second bit sequence corresponding to the time domain unit set based on the starting position and the ending position.

In some embodiments, the rate matching unit 420 is configured to determine a number of resource elements (REs) available to transmit multiplexed UCI in the $x^{th}$ time domain unit set; determine a number of REs available to transmit the first bit sequence based on the number of the REs available to transmit the multiplexed UCI and a number of REs allocated for transmitting the TB in the $x^{th}$ time domain unit set; and perform the second rate matching process on the first bit sequence based on the number of the REs available to transmit the first bit sequence, and determine the ending position of the second bit sequence corresponding to the $x^{th}$ time domain unit set in the circular buffer.

In some embodiments, the ate matching unit 420 is configured to determine the number of the REs available to transmit the multiplexed UCI in a following formula:

$$S_1 = S_2 * C.$$

$S_1$ indicates the number of the REs available to transmit the multiplexed UCI, $S_2$ indicates the number of REs allocated for transmitting the TB, and C indicates a beta coefficient.

In some embodiments, the rate matching unit 420 is configured to determine the number of REs allocated for transmitting the TB in the $x^{th}$ time domain unit; and perform the second rate matching process on the first bit sequence based on the number of REs allocated for transmitting the TB, and determine the ending position of the second bit sequence corresponding to the $x^{th}$ time domain unit set in the circular buffer. A part of data bits in the second bit sequence corresponding to the $x^{th}$ time domain unit set is replaced with a part or all of information in the UCI multiplexed in the $x^{th}$ time domain unit set to be transmitted.

In some embodiments, the rate matching unit 420 is configured to determine the position offset factor corresponding to the $x^{th}$ time domain unit set based on the version number of the RV and an ending position of a second bit sequence corresponding to a $(x-1)^{th}$ time domain unit set of the plurality of the time domain unit sets in the circular buffer.

In some embodiments, the rate matching unit 420 is configured to determine a total number of bits occupied by second bit sequences corresponding to all time domain unit sets prior to the $x^{th}$ time domain unit set in the circular buffer to be the position offset factor corresponding to the $x^{th}$ time domain unit set.

In some embodiments, the rate matching unit 420 is configured to determine the position offset factor corresponding to the $x^{th}$ time domain unit set in the following formula:

$$O_x = \sum_{i=0}^{x-1} d_i \;;$$

$O_x$ indicates the position offset factor corresponding to the $x^{th}$ time domain unit set, and $d_i$ indicates a number of bits occupied by a second bit sequence corresponding to an $i^{th}$ time domain unit set of the plurality of time domain unit sets in the circular buffer.

In some embodiments, the rate matching unit 420 is configured to determine a total number of transmittable bits in all time domain unit sets prior to the $x^{th}$ time domain unit set to be the position offset factor corresponding to the $x^{th}$ time domain unit set.

In some embodiments, the rate matching unit 420 is configured to determine the position offset factor corresponding to the $x^{th}$ time domain unit set in the following formula:

$$O_x = \sum_{i=0}^{x-1} t_i$$

$O_x$ indicates the position offset factor corresponding to the $x^{th}$ time domain unit set, and $t_i$ indicates a number of transmittable bits in an $i^{th}$ time domain unit set of the plurality of time domain unit sets.

In some embodiments, the rate matching unit 420 is further configured to determine the number of transmittable bits in each time domain unit set of the plurality of time domain unit sets in the following manner: determining a total number of REs available for uplink transmission on the each time domain unit set according to a time-frequency resource corresponding to the each time domain unit set; and determining the number of transmittable bits in the each time domain unit set based on the number of the REs available for the uplink transmission on the each time domain unit set and a modulation order.

In some embodiments, the each time domain unit set only includes one time domain unit, or the each time domain unit set includes at least one continuous time domain unit. The time domain unit comprises a slot or a symbol.

It should be understood that, the apparatus embodiments may correspond to the method embodiments, and similar description may refer to the method embodiments. The terminal device 400 shown in FIG. 7 may correspond to an entity implementing the method 200 in some embodiments of the present disclosure. In addition, aforementioned and other operations and/or functions of various units in the terminal device 400 are configured to achieve corresponding flows in various methods in FIG. 2, which are not repeated herein for brevity.

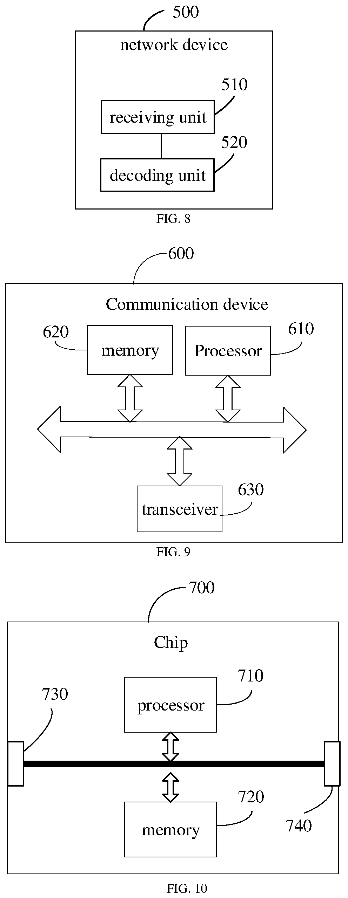

FIG. 8 is a schematic block view of a network device 500 according to some embodiments of the present disclosure.

As shown in FIG. 8, the network device 500 may include a receiving unit 510, and a decoding unit 520.

The receiving unit 510 is configured to receive a plurality of second bit sequences through a plurality of time domain unit sets, respectively.

The plurality of time domain unit sets comprises at least one time domain unit set, and a second bit sequence corresponding to each time domain unit set of the at least one time domain unit set includes uplink control information (UCI) multiplexed in the time domain unit set to be transmitted.

The decoding unit 520 is configured to decode the plurality of second bit sequences and obtain a target transport block.

In some embodiments, the decoding unit 520 is configured to, for the $x^{th}$ time domain unit set of the at least one time domain unit set, decode a second bit sequence corresponding to the x$^{th}$ time domain unit set in the following manner: determining a position offset factor corresponding to the x$^{th}$ time domain unit set; determining a starting position of the second bit sequence corresponding to the x$^{th}$ time domain unit set in a circular buffer based on a version number of a RV and the position offset factor corresponding to the x$^{th}$ time domain unit set; determining an ending position of the second bit sequence corresponding to the x$^{th}$ time domain unit set in the circular buffer based on a resource of UCI multiplexed in the x$^{th}$ time domain unit set; and decoding the second bit sequence corresponding to the x$^{th}$ time domain unit set based on the starting position and the ending position.

In some embodiments, the decoding unit 520 is configured to determine a number of REs available to transmit multiplexed UCI in the x$^{th}$ time domain unit set; determine a number of REs available to transmit a first bit sequence based on the number of the REs available to transmit the multiplexed UCI and a number of REs allocated for transmitting the TB in the x$^{th}$ time domain unit set; and determine the ending position of the second bit sequence corresponding to the x$^{th}$ time domain unit set in the circular buffer based on the number of the REs available to transmit the first bit sequence.

In some embodiments, the decoding unit 520 is configured to determine the number of the REs available to transmit the multiplexed UCI in the following formula:

$$S_1 = S_2 * C;$$

$S_1$ indicates the number of the REs available to transmit the multiplexed UCI, $S_2$ indicates the number of REs allocated for transmitting the TB, and C indicates a beta coefficient.

In some embodiments, the decoding unit 520 is configured to determine the number of REs allocated for transmitting a TB in the x$^{th}$ time domain unit; and determine the ending position of the second bit sequence corresponding to the x$^{th}$ time domain unit set in the circular buffer based on the number of REs allocated for transmitting the TB. A part of data bits in the second bit sequence corresponding to the x$^{th}$ time domain unit set is replaced with a part or all of information in the UCI multiplexed in the x$^{th}$ time domain unit set to be transmitted.

In some embodiments, the decoding unit 520 is configured to determine the position offset factor corresponding to the x$^{th}$ time domain unit set based on the version number of the RV and an ending position of a second bit sequence corresponding to a (x-1)$^{th}$ time domain unit set of the plurality of the time domain unit sets in the circular buffer.

In some embodiments, the decoding unit 520 is configured to determine a number of bits occupied by second bit sequences corresponding to all time domain unit sets prior to the x$^{th}$ time domain unit set in the circular buffer to be the position offset factor corresponding to the x$^{th}$ time domain unit set.

In some embodiments, the decoding unit 520 is configured to determine the position offset factor corresponding to the x$^{th}$ time domain unit set in the following formula:

$$O_x = \sum_{i=0}^{x-1} d_i \; ;$$

$O_x$ indicates the position offset factor corresponding to the x$^{th}$ time domain unit set, and $d_i$ indicates a number of bits occupied by a second bit sequence corresponding to an i$^{th}$ time domain unit set of the plurality of time domain unit sets in the circular buffer.

In some embodiments, the decoding unit 520 is configured to determine a total number of transmittable bits in all time domain unit sets prior to the x$^{th}$ time domain unit set to be the position offset factor corresponding to the x$^{th}$ time domain unit set.

In some embodiments, the decoding unit 520 is configured to determine the position offset factor corresponding to the x$^{th}$ time domain unit set in the following formula:

$$O_x = \sum_{i=0}^{x-1} t_i$$

$O_x$ indicates the position offset factor corresponding to the x$^{th}$ time domain unit set, and $t_i$ indicates a number of transmittable bits in an i$^{th}$ time domain unit set of the plurality of time domain unit sets.

In some embodiments, the decoding unit 520 is configured to determine the number of transmittable bits in each time domain unit set of the plurality of time domain unit sets in the following manner: determining a total number of REs available for uplink transmission on the each time domain unit set according to a time-frequency resource corresponding to the each time domain unit set; and determining the number of transmittable bits in the each time domain unit set based on the number of the REs available for the uplink transmission on the each time domain unit set and a modulation order.

In some embodiments, each time domain unit set only includes one time domain unit, or the each time domain unit set includes at least one continuous time domain unit. The time domain unit includes a slot or a symbol.

It should be understood that, the apparatus embodiments may correspond to the method embodiments, and similar description may refer to the method embodiments. The network device 500 shown in FIG. 8 may correspond to an entity implementing the method 300 in some embodiments of the present disclosure. In addition, aforementioned and other operations and/or functions of various units in the network device 500 are configured to achieve corresponding flows in various methods in FIG. 6, which are not repeated herein for brevity.

A communication device in some embodiments of the present disclosure is described above in conjunction with the accompanying drawings from the perspective of functional modules. It should be understood that the functional modules may be implemented in a form of a hardware, or may also be implemented in a form of a software, or may be implemented in a combination of hardware and software modules. Each operation of the method embodiments of embodiments of the present disclosure may be completed through an integrated logic circuit of the hardware in a processor or instruction in the form of the software. The operations of the method disclosed in conjunction with some embodiments of the present disclosure may be directly embodied to be implemented and completed by a hardware decoding processor, or to be implemented and completed by the combination of the hardware and the software modules in the hardware decoding processor. In some embodiments, the soft modules may be located in a mature storage medium in the art, such as, a random memory, a flash memory, a read-only memory, a programmable read-only memory, an electrically erasable programmable memory, and a register, etc. The storage medium is located in the memory. The processor reads information in the memory to complete the operations in method embodiments described above in conjunction with the hardware of the processor.

For example, the encoding unit 410, the rate matching unit 420, and the decoding unit 520 involved above may be all implemented by the processor. Both the transmitting unit 430 and the receiving unit 510 may be implemented by a transceiver.

FIG. 9 is a schematic block view of a communication device 600 according to some embodiments of the present disclosure.

As shown in FIG. 9, the communication device 600 may include a processor 610.

The processor 610 may call and run a computer program from a memory to implement the method in some embodiments of the present disclosure.

As shown in FIG. 9, the communication device 600 may also include a memory 620.

The memory 620 may be configured to store instruction information, or may also be configured to store codes, instructions, etc. implemented by the processor 610. The processor 610 may call and run the computer program from the memory 620 to implement the method in some embodiments of the present disclosure. The memory 620 may be a single device independent of the processor 610, or may also be integrated in the processor 610.

As shown in FIG. 9, the communication device 600 may also include a transceiver 630.

The processor 610 may control the transceiver 630 to communicate with other devices. For example, the processor 610 may transmit information or data to other devices, or receive the information or data transmitted by other devices. The transceiver 630 may include a transmitter and a receiver. The transceiver 630 may further include an antenna. The number of antennas may be one or more.

It should be understood that various components in the communication device 600 are connected through a bus system. The bus system also includes a power bus, a control bus, and a status signal bus in addition to a data bus.

It should also be understood that the communication device 600 may be the terminal device in some embodiments of the present disclosure, and may implement a corresponding process implemented by the terminal device in each method in some embodiments of the present disclosure. That is, the communication device 600 in some embodiments of the present disclosure may correspond to the terminal device 400 in some embodiments of the present disclosure and may correspond to an entity implementing the method 200 according to some embodiments of the present disclosure, which is not repeated herein for brevity. Similarly, the communication device 600 may be the network device in some embodiments of the present disclosure and may implement a corresponding process implemented by the network device in each method of some embodiments of the present disclosure. That is, the communication device 600 in some embodiments of the present disclosure may correspond to the network device 500 in some embodiments of the present disclosure and may correspond to an entity implementing the method 300 according to some embodiments of the present disclosure, which is not repeated herein for brevity.

In addition, a chip is provided in some embodiments of the present disclosure.

For example, the chip may be an integrated circuit chip and have a signal processing capability, and may implement or perform each method, operation, and logic block diagram disclosed in some embodiments of the present disclosure. The chip may also be referred to as a system chip, a chip system or system-on-chip, etc. In some embodiments, the chip may be applied to various communication devices, such that the communication device installed with the chip is capable of perform each method, operation, and logic block diagram disclosed in some embodiments of the present disclosure.

FIG. 10 is a schematic block view of a chip according to some embodiments of the present disclosure.

As shown in FIG. 10, the chip 700 includes a processor 710.

The processor 710 may call and run a computer program from a memory to implement the method in some embodiments of the present disclosure.

As shown in FIG. 10, the chip 700 may further include a memory 720.

The processor 710 may call and run a computer program from the memory 720 to implement the method in some embodiments of the present disclosure. The memory 720 may be configured to store instruction information and may also be configured to store codes, instructions, etc. executed by the processor 710. The memory 720 may be a single device independent of the processor 710, or may be integrated into the processor 710.

As shown in FIG. 10, the chip 700 may also include an input interface 730.

The processor 710 may control the input interface 730 to communicate with other devices or chips, e.g., to acquire information or data transmitted by other devices or chips.

As shown in FIG. 10, said chip 700 may also include an output interface 740.

The processor 710 may control the output interface 740 to communicate with other devices or chips, e.g., to output information or data to other devices or chips.

It should be understood that the chip 700 may be applied to a network device in some embodiments of the present disclosure, and may implement a corresponding process implemented by the network device in each method in some embodiments of the present disclosure, or a corresponding process implemented by the terminal device in each method of some embodiments of the present disclosure, which is not repeated herein for brevity.

It should also be understood that various components in the chip 700 are connected through a bus system. The bus system also includes a power bus, a control bus, and a status signal bus, in addition to a data bus.

The processor involved in the above may include but be not limited to a general-purpose processor, a digital signal processor (DSP), an application specific integrated circuit (ASIC), a field programmable gate array (FPGA), or other programmable logic devices, a discrete gate or transistor logic devices, discrete hardware component, etc.

The processor may be configured to implement or perform each method, operation, and logic block diagram in embodiments of the present disclosure. The operations of the method disclosed in conjunction with some embodiments of the present disclosure may be directly embodied to be implemented and completed by the hardware decoding processor, or to be implemented and completed by the combination of the hardware and the software modules in the hardware decoding processor. The soft modules may be located in the mature storage medium in the art, such as, the random memory, the flash memory, the read-only memory, the programmable read-only memory, an erasable programmable memory, and the register, etc. The storage medium is located in the memory. The processor reads the information in the memory to complete the operations in the method embodiments described above in conjunction with the hardware of the processor.

The memory involved in the above includes but is not limited to a volatile memory and/or a non-volatile memory. The non-volatile memory may be the Read-Only Memory (ROM), the Programmable ROM (PROM), the Erasable PROM (EPROM), Electrically EPROM (EEPROM), or the flash memory. The volatile memory may be a Random Access Memory (RAM), which is used as an external cache. Through exemplary but not limiting illustration, many forms of RAM are available, such as a Static RAM (SRAM), a Dynamic RAM (DRAM), a Synchronous DRAM (SDRAM), a Double Data Rate SDRAM (SDRAM), an Enhanced SDRAM (ESDRAM), a Synch Link DRAM (SLDRAM), and a Direct Rambus RAM (DR RAM).

It is noted that, the memory described herein is intended to include these memories and other any suitable types of memories.

A computer-readable storage medium is further provided in some embodiments of the present disclosure and configured to store a computer program. The computer-readable storage medium stores one or more programs, and the one or more programs include instructions. When the instructions are executed by a portable electronic device including a plurality of application programs, the portable electronic device is caused to perform the method of embodiments in relation to the method 200 or the method 300. In some embodiments, the computer-readable storage medium may be applied to the network device in some embodiments of the present disclosure. The computer program causes a computer to execute the corresponding process implemented by the network device in each method in some embodiments of the present disclosure, which is not repeated herein for brevity. In some embodiments, the computer-readable storage medium may be applied to a mobile terminal/terminal device in some embodiments of the present disclosure. The computer program causes the computer to execute the corresponding processes implemented by the mobile terminal/terminal device in each method in some embodiments of the present disclosure, which is not repeated herein for brevity.

A computer program product is further provided in some embodiments of the present disclosure and includes a computer program. In some embodiments, the computer program product may be applied to the network device in some embodiments of the present disclosure. The computer program causes the computer to perform the corresponding processes implemented by the network device in each method of some embodiments of the present disclosure, which is not repeated herein for brevity. In some embodiments, the computer program product may be applied to the mobile terminal/terminal device in some embodiments of the present disclosure. The computer program causes the computer to execute the corresponding processes implemented by the mobile terminal/terminal device in each method of some embodiments of the present disclosure, which is not repeated herein for brevity.

A computer program is also provided in some embodiments of the present disclosure. When the computer program is executed by the computer, the computer is caused to execute the method of embodiments in relation to the method 200 or the method 300. In some embodiments, the computer program may be applied to the network device in some embodiments of the present disclosure. When the computer program is run in the computer, the computer is caused to implement the corresponding process implemented by the network device in each method in some embodiments of the present disclosure, which is not repeated herein for brevity. In some embodiments, the computer program may be applied to the mobile terminal/terminal device in some embodiments of the present disclosure. When the computer program is run in the computer, the computer is caused to execute the corresponding processes implemented by the mobile terminal/terminal device in each method in some embodiments of the present disclosure, which is not repeated herein for brevity.

A communication system is further provided in some embodiments of the present disclosure and includes the terminal device and network device involved above to form the communication system 100 as shown in FIG. 1, which is not repeated herein for brevity. It should be noted that the term "system" and the like herein may also be referred to as a "network management architecture" or a "network system", etc.

It should also be understood that the terms used in embodiments of the present disclosure and appended claims are solely for the purpose of describing particular embodiments and are not intended to limit embodiments of the present disclosure. For example, a singular form such as "a", "the", and "described above" used in embodiments of the present disclosure and the appended claims are also intended to include a majority form, unless the context clearly indicates otherwise.

Those skilled in the art may realize that the units and algorithmic steps of each example described in conjunction with embodiments disclosed herein are capable of being implemented in an electronic hardware, or in a combination of a computer software and the electronic hardware. Whether these functions are performed in manner of the hardware or the software depends on particular application and design constraint conditions of the technical solution. A skilled professional person may use different methods to implement the described functions for each particular application, but such implementation should not be considered beyond the scope of embodiments of the present disclosure. When implemented as in a form of a software functional unit and sold or used as an independent product, these functions may be stored in the computer-readable storage medium. Based on such understanding, the technical solution of the present disclosure, in essence or the contribution to the prior art, or a part of the technical solution may be embodied in the form of a software product. The software product may be stored in a storage medium. The software product may include a number of instructions, which cause a computer device (the computer device may be a personal computer, a server or the network device, and the like) to perform all or parts of the operations of the methods describe in various embodiments of the present disclosure. The foregoing storage medium may include various media which are able to store program codes. The storage medium may include a U disk, a mobile hard disk, the Read-Only Memory (ROM), the Random Access Memory (RAM), a magnetic disk, an optical disk, and the like.

Those skilled in the art may also realize that processes of the above-described system, apparatus, and units may refer to the corresponding processes in the foregoing method embodiments, which are not be repeated herein for convenience and brevity of the description. In some embodiments provided in the present disclosure, it should be appreciated that the disclosed system, apparatus and method may be implemented in other manners. For example, the division of the units or modules or components in the apparatus embodiments described above is merely a logical function division. In actual implementation, there may be another division manner. For example, multiple units or modules or components may be combined or integrated into another system, or some units or modules or components can be ignored or not executed. For another example, the units/modules/components illustrated as a separate/display component may be or not be physically separated. That is, the units/modules/components may be located at the same place or may be distributed to multiple network units. Some or all of these units/modules/components may be selected to achieve the purpose of embodiments of the present disclosure according to actual needs. Finally, it is to be noted that the mutual coupling or direct coupling or communication connection shown or discussed above may be an indirect coupling or communication connection through some interfaces, apparatus or units, and may be electrical, mechanical or in other forms.

The above content is merely some implementations of embodiments of the present disclosure, while the scope of embodiments of the present disclosure is not limited thereto. A change or replacement easily got by those skill in the art within the technical scope disclosed by embodiments of the present disclosure, shall all fall into the scope of embodiments of the present disclosure. Therefore, the scope of embodiments of the present disclosure shall be subject to the scope of the claims.

**Claims**

1.  A wireless communication method, comprising:

    encoding a transport block which is transmitted based on a plurality of time domain unit sets and obtaining a first bit sequence, wherein the plurality of time domain unit sets comprises at least one time domain unit set;
    performing a rate matching process on the first bit sequence based on the plurality of time domain unit sets and obtaining a plurality of second bit sequences respectively corresponding to the plurality of time domain unit sets, wherein a second bit sequence corresponding to each of the at least one time domain unit set comprises uplink control information (UCI) multiplexed in the each of the at least one time domain unit set to be transmitted; and
    modulating and transmitting the plurality of second bit sequences, respectively, based on the plurality of time domain unit sets.

2.  The method according to claim 1, wherein the performing a rate matching process on the first bit sequence based on the plurality of time domain unit sets and obtaining a plurality of second bit sequences respectively corresponding to the plurality of time domain unit sets, comprises:
    for a $x^{th}$ time domain unit set of the at least one time domain unit set, determining a second bit sequence corresponding to the $x^{th}$ time domain unit set in a following manner:

    determining a position offset factor corresponding to the $x^{th}$ time domain unit set;
    performing a first rate matching process on the first bit sequence based on a version number of a redundancy version (RV) and the position offset factor corresponding to the $x^{th}$ time domain unit set, and determining a starting position of the second bit sequence corresponding to the $x^{th}$ time domain unit set in a circular buffer;
    performing a second rate matching process on the first bit sequence based on a resource of UCI multiplexed in the $x^{th}$ time domain unit set, and determining an ending position of the second bit sequence corresponding to the $x^{th}$ time domain unit set in the circular buffer; and
    obtaining the second bit sequence corresponding to the time domain unit set based on the starting position and the ending position.

3.  The method according to claim 2, wherein the performing a second rate matching process on the first bit sequence based on a resource of UCI multiplexed in the $x^{th}$ time domain unit set, and determining an ending position of the second bit sequence corresponding to the $x^{th}$ time domain unit set in the circular buffer, comprises:

    determining a number of resource elements (REs) available to transmit the multiplexed UCI in the $x^{th}$ time domain unit set;
    determining a number of REs available to transmit the first bit sequence based on the number of the REs available to transmit the multiplexed UCI and a number of REs allocated for transmitting the transport block in the $x^{th}$ time domain unit set; and
    performing the second rate matching process on the first bit sequence based on the number of the REs available to transmit the first bit sequence, and determining the ending position of the second bit sequence corresponding to the $x^{th}$ time domain unit set in the circular buffer.

4.  The method according to claim 3, wherein the determining a number of the REs available to transmit the multiplexed UCI in the $x^{th}$ time domain unit set, comprises:
    determining the number of the REs available to transmit the multiplexed UCI in a following formula:

$$S_1 = S_2 * C;$$

    wherein S i indicates the number of the REs available to transmit the multiplexed UCI, $S_2$ indicates the number of REs allocated for transmitting the transport block, and C indicates a beta coefficient.

5.  The method according to claim 2, wherein the performing a second rate matching process on the first bit sequence based on a resource of UCI multiplexed in the $x^{th}$ time domain unit set, and determining an ending position of the second bit sequence corresponding to the $x^{th}$ time domain unit set in the circular buffer, comprises:

    determining a number of REs allocated for transmitting the transport block in the $x^{th}$ time domain unit set; and

performing the second rate matching process on the first bit sequence based on the number of REs allocated for transmitting the transport block, and determining the ending position of the second bit sequence corresponding to the $x^{th}$ time domain unit set in the circular buffer;

wherein a part of data bits in the second bit sequence corresponding to the $x^{th}$ time domain unit set is replaced with a part or all of information in the UCI multiplexed in the $x^{th}$ time domain unit set to be transmitted.

6. The method according to any one of claims 2 to 5, wherein the determining a position offset factor corresponding to the $x^{th}$ time domain unit set, comprises:

determining the position offset factor corresponding to the $x^{th}$ time domain unit set based on the version number of the RV and an ending position of a second bit sequence corresponding to a $(x-1)^{th}$ time domain unit set of the plurality of the time domain unit sets in the circular buffer.

7. The method according to any one of claims 2 to 5, wherein the determining a position offset factor corresponding to the $x^{th}$ time domain unit set, comprises:

determining the position offset factor corresponding to the $x^{th}$ time domain unit set as a total number of bits occupied by second bit sequences corresponding to all time domain unit sets prior to the $x^{th}$ time domain unit set in the circular buffer.

8. The method according to claim 7, wherein the determining the position offset factor corresponding to the $x^{th}$ time domain unit set as a total number of bits occupied by second bit sequences corresponding to all time domain unit sets prior to the $x^{th}$ time domain unit set in the circular buffer, comprises:

determining the position offset factor corresponding to the $x^{th}$ time domain unit set in a following formula:

$$O_x = \sum_{i=0}^{x-1} d_i \; ;$$

wherein $O_x$ indicates the position offset factor corresponding to the $x^{th}$ time domain unit set, and $d_i$ indicates a number of bits occupied by a second bit sequence corresponding to an $i^{th}$ time domain unit set of the plurality of time domain unit sets in the circular buffer.

9. The method according to any one of claims 2 to 5, wherein the determining a position offset factor corresponding to the $x^{th}$ time domain unit set, comprises:

determining the position offset factor corresponding to the $x^{th}$ time domain unit set as a total number of transmittable bits in all time domain unit sets prior to the $x^{th}$ time domain unit set.

10. The method according to claim 9, wherein the determining the position offset factor corresponding to the $x^{th}$ time domain unit set as a total number of transmittable bits in all time domain unit sets prior to the $x^{th}$ time domain unit set, comprises:

determining the position offset factor corresponding to the $x^{th}$ time domain unit set in a following formula:

$$O_x = \sum_{i=0}^{x-1} t_i$$

wherein $O_x$ indicates the position offset factor corresponding to the $x^{th}$ time domain unit set, and $t_i$ indicates a number of transmittable bits in an $i^{th}$ time domain unit set of the plurality of time domain unit sets.

11. The method according to claim 9, further comprising:

determining the number of transmittable bits in each of the plurality of time domain unit sets in a following manner:

determining a total number of REs available for uplink transmission in the each of the plurality of time domain unit sets according to a time-frequency resource corresponding to the each of the plurality of time domain unit sets; and

determining a number of transmittable bits in the each of the plurality of time domain unit sets based on the number of the REs available for the uplink transmission in the each of the plurality of time domain unit sets and a modulation order.

**12.** The method according to any one of claims 1 to 11, wherein each of the plurality of time domain unit sets only comprises one time domain unit, or the each time domain unit set comprises at least one continuous time domain unit; and the time domain unit comprises a slot or a symbol.

**13.** A wireless communication method, comprising:

receiving a plurality of second bit sequences through a plurality of time domain unit sets, respectively, wherein the plurality of time domain unit sets comprises at least one time domain unit set, and a second bit sequence corresponding to each of the at least one time domain unit set comprises uplink control information (UCI) multiplexed in the each of the at least one time domain unit set to be transmitted; and

decoding the plurality of second bit sequences and obtaining a target transport block.

**14.** The method according to claim 13, wherein the decoding the plurality of second bit sequences and obtaining a target transport block, comprises:

for the $x^{th}$ time domain unit set of the at least one time domain unit set, decoding a second bit sequence corresponding to the $x^{th}$ time domain unit set in a following manner:

determining a position offset factor corresponding to the $x^{th}$ time domain unit set;

determining a starting position of the second bit sequence corresponding to the $x^{th}$ time domain unit set in a circular buffer based on a version number of a RV and the position offset factor corresponding to the $x^{th}$ time domain unit set;

determining an ending position of the second bit sequence corresponding to the $x^{th}$ time domain unit set in the circular buffer based on a resource of UCI multiplexed in the $x^{th}$ time domain unit set; and

decoding the second bit sequence corresponding to the $x^{th}$ time domain unit set based on the starting position and the ending position.

**15.** The method according to claim 14, wherein the determining an ending position of the second bit sequence corresponding to the $x^{th}$ time domain unit set in the circular buffer based on a resource of UCI multiplexed in the $x^{th}$ time domain unit set, comprises:

determining a number of REs available to transmit multiplexed UCI in the $x^{th}$ time domain unit set;

determining a number of REs available to transmit a first bit sequence based on the number of the REs available to transmit the multiplexed UCI and a number of REs allocated for transmitting a transport block in the $x^{th}$ time domain unit set; and

determining the ending position of the second bit sequence corresponding to the $x^{th}$ time domain unit set in the circular buffer based on the number of the REs available to transmit the first bit sequence.

**16.** The method according to claim 15, wherein the determining the number of REs available to transmit multiplexed UCI in the $x^{th}$ time domain unit set, comprises:

determining the number of the REs available to transmit the multiplexed UCI in a following formula:

$$S_1 = S_2 * C;$$

wherein $S_1$ indicates the number of the REs available to transmit the multiplexed UCI, $S_2$ indicates the number of REs allocated for transmitting the transport block, and C indicates a beta coefficient.

**17.** The method according to claim 14, wherein the determining an ending position of the second bit sequence corresponding to the $x^{th}$ time domain unit set in the circular buffer based on a resource of UCI multiplexed in the $x^{th}$ time domain unit set, comprises:

determining a number of REs allocated for transmitting a transport block in the $x^{th}$ time domain unit; and

determining the ending position of the second bit sequence corresponding to the $x^{th}$ time domain unit set in the circular buffer based on the number of REs allocated for transmitting the transport block;

wherein a part of data bits in the second bit sequence corresponding to the $x^{th}$ time domain unit set is replaced with a part or all of information in the UCI multiplexed in the $x^{th}$ time domain unit set to be transmitted.

**18.** The method according to any one of claims 14 to 17, wherein the determining a position offset factor corresponding

to the x<sup>th</sup> time domain unit set, comprises:
determining the position offset factor corresponding to the x<sup>th</sup> time domain unit set based on the version number of the RV and an ending position of a second bit sequence corresponding to a (x-1)<sup>th</sup> time domain unit set of the plurality of the time domain unit sets in the circular buffer.

19. The method according to any one of claims 14 to 17, wherein the determining a position offset factor corresponding to the x<sup>th</sup> time domain unit set, comprises:
determining the position offset factor corresponding to the x<sup>th</sup> time domain unit set as the number of bits occupied by second bit sequences corresponding to all time domain unit sets prior to the x<sup>th</sup> time domain unit set in the circular buffer.

20. The method according to claim 19, wherein the determining the position offset factor corresponding to the x<sup>th</sup> time domain unit set as the number of bits occupied by second bit sequences corresponding to all time domain unit sets prior to the x<sup>th</sup> time domain unit set in the circular buffer, comprises:
determining the position offset factor corresponding to the x<sup>th</sup> time domain unit set in a following formula:

$$O_x = \sum_{i=0}^{x-1} d_i \; ;$$

wherein $O_x$ indicates the position offset factor corresponding to the x<sup>th</sup> time domain unit set, and $d_i$ indicates a number of bits occupied by a second bit sequence corresponding to an i<sup>th</sup> time domain unit set of the plurality of time domain unit sets in the circular buffer.

21. The method according to any one of claims 14 to 17, wherein the determining a position offset factor corresponding to the x<sup>th</sup> time domain unit set, comprises:
determining the position offset factor corresponding to the x<sup>th</sup> time domain unit set as a total number of transmittable bits in all time domain unit sets prior to the x<sup>th</sup> time domain unit set.

22. The method according to claim 21, wherein the determining the position offset factor corresponding to the x<sup>th</sup> time domain unit set as a total number of transmittable bits in all time domain unit sets prior to the x<sup>th</sup> time domain unit set, comprises:
determining the position offset factor corresponding to the x<sup>th</sup> time domain unit set in a following formula:

$$O_x = \sum_{i=0}^{x-1} t_i$$

wherein $O_x$ indicates the position offset factor corresponding to the x<sup>th</sup> time domain unit set, and $t_i$ indicates a number of transmittable bits in an i<sup>th</sup> time domain unit set of the plurality of time domain unit sets.

23. The method according to claim 22, further comprising:
determining the number of transmittable bits on each of the plurality of time domain unit sets in a following manner:

determining a total number of REs available for uplink transmission in the each of the plurality of time domain unit sets according to a time-frequency resource corresponding to the each of the plurality of time domain unit sets; and
determining the number of transmittable bits in the each of the plurality of time domain unit sets based on the number of the REs available for the uplink transmission in the each of the plurality of time domain unit sets and a modulation order.

24. The method according to any one of claims 13 to 23, wherein each time domain unit set of the plurality of time domain unit sets only comprises one time domain unit, or the each time domain unit set of the plurality of time domain unit sets comprises at least one continuous time domain unit; and a time domain unit comprises a slot or a symbol.

25. A terminal device, comprising:

an encoding unit, configured to encode a transport block which is transmitted based on a plurality of time domain unit sets and obtain a first bit sequence, wherein the plurality of time domain unit sets comprises at least one time domain unit set;

a rate matching unit, configured to perform a rate matching process on the first bit sequence based on the plurality of time domain unit sets and obtain a plurality of second bit sequences respectively corresponding to the plurality of time domain unit sets, wherein a second bit sequence corresponding to each of the at least one time domain unit set comprises uplink control information (UCI) multiplexed in the each of the at least one time domain unit set to be transmitted; and

a transmitting unit, configured to modulate and transmit the plurality of second bit sequences, respectively, based on the plurality of time domain unit sets.

26. A network device, comprising:

a receiving unit, configured to receive a plurality of second bit sequences through a plurality of time domain unit sets, respectively, wherein the plurality of time domain unit sets comprises at least one time domain unit set, and a second bit sequence corresponding to each of the at least one time domain unit set comprises uplink control information (UCI) multiplexed in the each of the at least one time domain unit set to be transmitted; and

a decoding unit, configured to decode the plurality of second bit sequences and obtain a target transport block.

27. A terminal device, comprising:

a processor; and

a memory, configured to store a computer program;

wherein the processor is configured to call and run the computer program stored in the memory to perform the method as claimed in any one of claims 1 to 12.

28. A network device, comprising:

a processor; and

a memory, configured to store a computer program;

wherein the processor is configured to call and run the computer program stored in the memory to perform the method as claimed in any one of claims 13 to 24.

29. A chip, comprising:

a processor, configured to call and run a computer program from a memory to cause a device installed with the chip to implement the method as claimed in any one of claims 1 to 12.

30. A computer-readable storage medium, wherein the computer-readable storage medium is configured to store a computer program, and the computer program is configured to cause a computer to implement the method as claimed in any one of claims 1 to 12 or to implement the method as claimed in any one of claims 13 to 24.

31. A computer program product, comprising computer program instructions, wherein the computer program instructions are configured to cause a computer to implement the method as claimed in any one of claims 1 to12 or to implement the method as claimed in any one of claims 13 to 24.

32. A computer program, wherein the computer program is configured to cause a computer to implement the method as claimed in any one of claims 1 to12 or to implement the method as claimed in any one of claims 13 to 24.

<u>100</u>

130

110

120

110

FIG. 1

<u>200</u>

| encoding a transport block which is transmitted based on a plurality of time domain unit sets and obtaining a first bit sequence | S210 |

| performing a rate matching process on the first bit sequence based on the plurality of time domain unit sets and obtaining a plurality of second bit sequences respectively corresponding to the plurality of time domain unit sets, wherein the plurality of time domain unit sets comprises at least one time domain unit set, a second bit sequence corresponding to each of the at least one time domain unit set comprises uplink control information (UCI) multiplexed in the each of the at least one time domain unit set to be transmitted | S220 |

| modulating and transmitting the plurality of second bit sequences, respectively, based on the plurality of time domain unit sets | S230 |

FIG. 2

a plurality of time domain unit sets

time domain unit set

◩ DMRS     ⊞ UCI     ⊠ PUSCH

FIG. 3

a plurality of time domain unit sets

time domain unit set

RV0
RV3
RV1
RV2

performing a first rate matching process and
a second rate matching process on a current
time domain unit set based on data bits
allocated to a previous time domain unit set
through the first rate matching process and
the second rate matching process

circular buffer (a
first rate matching)

◩ DMRS     ⊞ UCI     ⊠ PUSCH

FIG. 4

a plurality of time domain unit sets

time domain
unit set

RV0
RV3
RV1
RV2

performing the second rate matching
process based on data bits allocated to the
time domain unit set through the first rate
matching process

circular buffer (a
first rate matching)

▨ DMRS    ⫿ UCI    ▩ PUSCH

FIG. 5

300

receiving a plurality of second bit sequences through a plurality of time domain unit
sets, respectively, wherein the plurality of time domain unit sets comprises at least one
time domain unit set, and a second bit sequence corresponding to each of the at least
one time domain unit set comprises uplink control information (UCI) multiplexed in the
each of the at least one time domain unit set to be transmitted

S310

decoding the plurality of second bit sequences and obtaining a target transport block

S320

FIG. 6

400

terminal device

410
encoding unit

420
rate matching unit

430
transmitting unit

FIG. 7

27

500

network device

510

receiving unit

520

decoding unit

FIG. 8

600

Communication device

620

memory

Processor

610

630

transceiver

FIG. 9

700

Chip

710

processor

730

720

memory

740

FIG. 10

## INTERNATIONAL SEARCH REPORT

| International application No. |
|---|
| **PCT/CN2021/102432** |

| A. | CLASSIFICATION OF SUBJECT MATTER |
|---|---|

H04L 5/00(2006.01)i

According to International Patent Classification (IPC) or to both national classification and IPC

| B. | FIELDS SEARCHED |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 上行, 共享信道, 控制信息, 调度请求, 解调, 调制, 编码, 复用, 时域, 时隙, 符号, 资源, 集合, 传输块, 码块, 资源元素, 序列, 比特, 重叠, 速率匹配, 打孔, 映射, 偏移, PUSCH, UCI, uplink control information, CSI, HARQ ack, SR, RE, RB, TB, OFDM, slot, modulate, record, multiplex, puncture, rate matching, offset

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111314033 A (VIVO COMMUNICATION TECHNOLOGY CO., LTD.) 19 June 2020 (2020-06-19)<br>description, paragraphs [0004]-[0116] and [0136]-[0139], and figure 3 | 1, 12, 13, 24-32 |
| X | CN 108322296 A (MEDIATEK INC.) 24 July 2018 (2018-07-24)<br>description, paragraphs [0004]-[0039], and figure 3 | 1, 12, 13, 24-32 |
| X | CN 110063039 A (SAMSUNG ELECTRONICS CO., LTD.) 26 July 2019 (2019-07-26)<br>claims 1-14, and description, paragraphs [0117]-[0256] | 1, 12, 13, 24-32 |
| A | CN 111669259 A (SHANGHAI LANGBO COMMUNICATION TECHNOLOGY CO., LTD.)<br>15 September 2020 (2020-09-15)<br>entire document | 1-32 |
| A | CN 112332944 A (APPLE INC.) 05 February 2021 (2021-02-05)<br>entire document | 1-32 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 March 2022** | **21 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| PCT/CN2021/102432 |

| Patent document cited in search report | | | Publication date (day/month/year) | Patent family member(s) | | | Publication date (day/month/year) |
|---|---|---|---|---|---|---|---|
| CN | 111314033 | A | 19 June 2020 | US | 2021321394 | A1 | 14 October 2021 |
| | | | | KR | 20210096273 | A | 04 August 2021 |
| | | | | EP | 3905570 | A1 | 03 November 2021 |
| | | | | WO | 2020135214 | A1 | 02 July 2020 |
| | | | | CN | 111314033 | B | 27 August 2021 |
| | | | | IN | 202147031782 | A | 23 July 2021 |
| CN | 108322296 | A | 24 July 2018 | US | 2018206225 | A1 | 19 July 2018 |
| | | | | US | 10893512 | B2 | 12 January 2021 |
| | | | | TW | 201828741 | A | 01 August 2018 |
| | | | | EP | 3349384 | A1 | 18 July 2018 |
| | | | | CN | 108322296 | B | 05 February 2021 |
| | | | | TW | I669974 | B1 | 21 August 2019 |
| CN | 110063039 | A | 26 July 2019 | EP | 3806380 | A1 | 14 April 2021 |
| | | | | PH | 12019501291 | A1 | 02 December 2019 |
| | | | | EP | 3535920 | A1 | 11 September 2019 |
| | | | | EP | 3535920 | A4 | 30 October 2019 |
| | | | | EP | 3535920 | B1 | 27 January 2021 |
| | | | | MX | 2019006695 | A | 21 August 2019 |
| | | | | KR | 20190095328 | A | 14 August 2019 |
| | | | | WO | 2018106063 | A1 | 14 June 2018 |
| | | | | CA | 3046451 | A1 | 14 June 2018 |
| | | | | US | 2018167932 | A1 | 14 June 2018 |
| | | | | US | 10375681 | B2 | 06 August 2019 |
| | | | | ES | 2860475 | T3 | 05 October 2021 |
| | | | | AU | 2017373540 | A1 | 18 July 2019 |
| | | | | IN | 201937024952 | A | 23 August 2019 |
| | | | | VN | 67223 | A | 25 December 2019 |
| | | | | JP | 2020501456 | A | 16 January 2020 |
| CN | 111669259 | A | 15 September 2020 | WO | 2020181993 | A1 | 17 September 2020 |
| | | | | CN | 111669259 | B | 23 November 2021 |
| | | | | US | 2021400659 | A1 | 23 December 2021 |
| CN | 112332944 | A | 05 February 2021 | CN | 108781124 | B | 03 November 2020 |
| | | | | HK | 1261805 | A0 | 03 January 2020 |
| | | | | CN | 108781124 | A | 09 November 2018 |
| | | | | WO | 2017155591 | A1 | 14 September 2017 |

Form PCT/ISA/210 (patent family annex) (January 2015)